(19) Europäisches Patentamt
European Patent Office
Office européen des brevets

(11) EP 3 364 343 A1

(12) EUROPEAN PATENT APPLICATION

(43) Date of publication:
**22.08.2018 Bulletin 2018/34**

(51) Int Cl.:
***G06K 9/52*** *(2006.01)* ***G06K 9/62*** *(2006.01)*

(21) Application number: **17156741.5**

(22) Date of filing: **17.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Cogisen SRL**
**80121 Napoli (IT)**

(72) Inventor: **Rijnders, Christiaan Erik**
**00135 Roma (IT)**

(74) Representative: **Leone, Mario et al**
**Cantaluppi & Partners S.r.l.**
**Viale della Tecnica, 205**
**00144 Roma (IT)**

# (54) METHOD FOR IMAGE PROCESSING FOR OBJECT DETECTION

(57) A method of object detection to be carried out by an electronic processing unit, based either on images or on a digital video stream of images, the images being defined by a frame, wherein the spatial domain content of the frames is transformed into corresponding frequency domain content of the frames, and wherein at least two sparse frequency zone of said frequency domain content of the frames are selected so as to transfer the image data within said sparse zones to the frequency domain, comprises the steps of: applying a L-transformation to the frequency input of said sparse zone, choosing at least one adaptation of the function that follows from the L-transformation, separately with respect to two axis (X, Y), then combining them in a single value, and applying to them one or more filtering kernels at least partially overlapping said sparse zones; performing a convolution between the transformed frequency data within each sparse zone and said kernels, combining the results in single values, each value representing an extracted feature; normalizing the frequency domain data of the above pair of sparse zones using only frequency domain data present in said sparse zones; and inputting the extracted features of the normalized frequency domain data in a classifier, therefore obtaining the data for object detection or visual saliency to use for video compression.

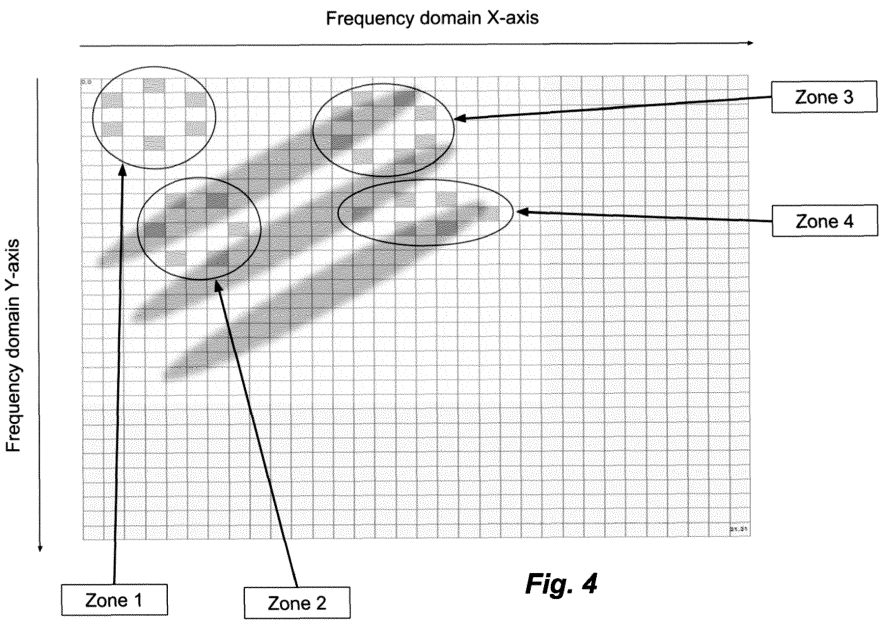


*Fig. 4*

EP 3 364 343 A1

## Description

## BACKGROUND OF THE INVENTION

### 1. Field of the Invention

The present disclosure is related to a method for the detection of objects, intended to be built in any kind of device, possibly a common device, provided with suitable means for digitalizing images, possibly but not exclusively in a digital video stream.

A common device is meant to be an easily commercially available electronic device like a smartphone, a tablet, a laptop or any portable or hand-held device with a suitable digital video camera. On the other hand, the device may be represented by one or more cameras, possibly organized in a network, linked to either a computer or to server for the image computing. Besides, the detection method may be simply implemented in an offline process, on stored digital images or videos by a suitable hardware comprising a storage memory, a RAM memory and at least a microprocessor, through a software run in the hardware.

The present disclosure also concerns a method for operating a device or a system, provided with at least a digital camera producing a video stream or a series of digital images, to obtain an object detection through both the camera and a processor of the device or system, in connection with at least one classifier stored in a memory device, accessible by the operated device or system.

### 2. Description of the prior art

In engineering applications of image processing, approximations are increasingly no longer acceptable. Examples of such applications can be found in diagnostics and in the creation of models for simulations or in simulators. Highly non-linear, transient and dynamic effects, which have a high level of noise relative to the signal, need to be appropriately captured. An example of this application is represented by the detection of objects using only a minimal amount of information. Such detection can be requested for partially occluded objects or for objects far from the shooting camera, or even objects with many different representations and fast moving objects, or finally a combination thereof.

Object detection techniques in image processing are being widely applied in various contexts. By way of example and with no limitative purpose, this recognition is used in human face tagging technology on social networks, in software for the recognition of hand gestures, in automotive software for the detection of pedestrians, cyclists and vehicles, in software for the recognition of body movements, in human face detection technology for augmented reality and screens with 3D effects, in object recognition for augmented reality, in interfaces using head orientation or eye orientation tracking, in object tracking technology for security systems and finally in gaze tracking technology.

There are still specific hardware solutions for such object detection products; for example, gaze tracking and the recognition of gestures are technologies that often require either integrated infrared projectors or extra cameras for stereo vision to obtain the required accuracy.

There is a clear future trend of all these object detection technologies migrating onto the next generation of interactive interfaces and operating systems. The devices on which such technologies can be represented are, for example, smartphones, tablets, wearable hardware such as interactive glasses, but also any kind of interactive objects in future homes, offices or public places. These devices can be provided for special uses such as interactive television or intelligent homes, and they can also be used in automotive safety systems, healthcare, advertising, security camera networks, internet-of-things, next to many other possible uses.

Such technology can basically be integrated into any device or network connected device, where reprogrammable hardware is used and where video camera inputs can be added.

Adding extra hardware to devices, purely to help the functioning of object detection algorithms, implies higher costs and extra battery drain. Then, there are extra research and development costs required to create the miniature hardware, with current state-of-the-art hardware often still being too large to be integrated into most consumer electronics devices.

Besides the hardware costs, to a large degree, what is hindering the mass scale use of object detection technology on, for example, mobile hardware platforms, is that the required object detection calculations are too slow to keep up with the frame rate of the cameras or use too much of the available processing power in doing so.

Therefore, before the implementation on the next generation of operating systems and devices become feasible in mass volumes, such an object detection technology first will require software-only solutions able to process images a lot faster than the current state of the art.

This migration towards software-only solutions is also being facilitated by continuous camera technology improvements, which bring increasingly higher frame rates, better motion processing, more effective colour highlighting, keener adaptation to contrasts, smarter adaptation to light changes and increasingly higher screen resolutions. This trend will further increase the effectiveness of software-only solutions for object detection.

The need for object detection to use as little processing power as possible is intended for both saving battery life as well as for the requirement for real-time use. Real-time object detection algorithms should produce devices with more natural user interfaces. While running in real-time, object detection algorithms also need to run in the background without limiting the main processes running in the foreground.

Further, it should be noted that the required amount of calculations may exponentially grow as the input image size increases. A rise in video frame rate would also mean that there would be less time for the object detection algorithm to finish the calculations before the next video input frame arrives.

Therefore, a side effect of the increasingly high video frame rates and growing input image quality is that current state of the art object detection algorithms, will need to increasingly down-sample input images, to return to acceptable processing speeds, thus losing much of the extra information in the higher quality input image.

Such down-sampling thereby negates a large part of the advantages of having such high definition images in input for object detection.

In addition, object detection methods are required in a full mobility environment, meaning that they can be used in everyday situations without the requirement for relatively little movement between the object and the camera and without the requirement for constant lighting conditions.

It is also not effective to count on the continued improvement of processing power to decrease the relative use of processing power by given algorithms, since the applications, e.g. games, scale to use the maximum of processing power, therefore always leaving a minimal amount for algorithms such as object detection to run in the background.

In view of the above, many methods are disclosed in the computer vision literature for object recognition and object tracking techniques.

In object detection, all the known methods use several kinds of features extracted from the digital images, in turn based on a plurality of methods for extracting these features. The methods for selecting and extracting the features from digital images are the roots of the object detection techniques. Different ways are also known for using such selected features: in most cases, such features are used either for training a classifier or for being correlated between sets of known features in a classifier.

The training phase for object detection methods generally takes much time because it needs the input of a considerable amount of data to create a reasonable and affordable model.

With such a trained model, the generic process for the detection of an object can be summarized as: input image, feature extraction, feature analysis and finally object classification.

Viola-Jones is one of the most commonly used object detection frameworks. The features employed by the detection framework universally involve the sums of image pixels within simple rectangular areas, which are usually converted through a grey-scale filter to slightly simplify the foreseen computations.

Such methods are called weak classifiers, requiring a great number of features (in the order of thousands) or even multiple cascades of such a great number of features to obtain an acceptable level of accuracy, and this large number of features involves the use of several search boxes and multiple repetitions of the computations.

Methods using many features, such as Viola-Jones, and techniques using tree-like cascades, such as AdaBoost, short for "Adaptive Boosting", have an inherently non-linear performance, because there is no linear correlation between the robustness of the detection of the algorithms and the number of computations required by such algorithms. For each step in detection performance, the model increases in complexity. To allow the use of such algorithms in real time applications, since the amount of processing power that can be dedicated by a conventional device to the algorithms is usually restricted while, in contrast, the amount of computations required cannot be predicted for the required level of performance of the algorithm, such techniques require the extraction of a solution space from the model, to be used for quick detection estimates before using a full model

Other methods, such as SIFT, short for Scale-invariant feature transform, detect and describe a model of local features in images.

For any object in a digital image, interesting points on the object can be extracted to provide a model description of that object.

The SIFT features are local and based on the appearance of the object at particular interest points, and are invariant to image scale and rotation. They are also robust to changes in illumination, noise, and minor changes in viewpoint. Object description by sets of SIFT features is also robust to partial occlusion.

However, such techniques can be computationally very intensive, and to make such techniques work at high frame rates in real time often it is required to restrict the number of features and complexity of features, thus hindering the effectiveness of the model.

Other methods, often used for the detection of the human head orientation or the capturing of emotions on a human face, extract geometrical points from a digitalized frame. They rely on the correlation or on the correspondence between these points and a predetermined 2D or 3D shape model. Examples of these methods are known as Active Shape models (ASM) and Active Appearance models (AAM).

ASM methods search along profiles about the current model point positions to update the current estimate of the shape of the object. In practice, ASM technique seeks to match a set of model points to an image, constrained by a statistical model of shape.

Instead, AAM technique samples the image data and uses the differences between model and sample to update the appearance model parameters. The difference with ASM is that AAM seeks to match both the position of the model points and a representation of the texture of the object to an image.

The features of the methods mentioned above are usually extracted within the spatial domain. Methods only using calculations within the spatial domain image information have less scope for a substantial speed improvement.

Methods for object detection belonging to the prior art may also use the so called filtering kernels, shortly kernels, in the frequency domain to first accentuate discriminative features of the object to be classified and then recognized.

Then, the features that are extracted after the use of a kernel can either be the results of the sums of pixels in the transformed image or the sums of cells in the frequency domain.

Said kernels operated as filters in the frequency domain will be hereinafter explained and detailed.

Most of such methods use a pre-defined series of kernels evenly distributed in the frequency domain. An example of this technique is the use of Gabor banks. Each kernel setting results in a different image in the spatial domain which has been transformed by the kernel. The features extracted in such methods are typically the coordinates of the highest value of pixel intensity within the transformed image. Typically, around forty different Gabor filters are used in such methods.

Since the full frequency domain calculations are performed, and a transformation is required each time from spatial domain to frequency domain and then back again from frequency domain to spatial domain, such methods also require a large number of calculations.

Further, such methods often uses one of the variants of FFT, a fast version of the Fourier Transformation that speeds up the computations, with DCT being the discrete version of this. FFT requires the input images to be re-sampled, because the pixel width and pixel height of the image at the input both need to be of a size that is a power of two.

In object recognition there is a further classification step where the extracted features need to be discriminating, allowing to be recognized for a specific object. This aspect is mainly used in human face recognition, where an individual is recognized. Examples of methods for object recognition are Principal Component Analysis using *eigenfaces,* Linear Discriminate Analysis and Elastic Bunch Graph Matching using the Fisherface algorithm.

Methods for object detection similar to those above mentioned can also be combined with methods for object tracking. In object tracking, the dynamics of the movement of the object on the screen are followed. Commonly used methods for this are for example the Mean-Shift algorithm and Template Matching. Such algorithms have good performance for real-time usage. However such methods do not generate generic models of objects, instead learning a small sub sample of an object.

As mentioned above, commonly used object detection methods already achieve good detection rates on typical objects in images, for example the detection of faces of people posing in front of a camera. However, their use in real-time applications on common devices is still limited, because the difficulty of the detection task is greatly increasing since, in real-world uses, there can be a great number of lighting conditions, many more unexpected versions of the object to be detected and also often only a partial visibility of the object to be recognized. All these possible contingencies limit the use of many commonly used object detection methods, due to the complexity of the method detection training requested to achieve the final detection, and also for the number of calculations required by such methods to achieve the necessary robustness.

The above is not a limitation for offline processing of images for object detection, where the time elapsed for the detection is not the main constraint. However, in real-time applications object detection must work at least at the video input frame rate.

Summarizing, methods described as prior art above still are not used on a large scale in unconstrained real-world real-time applications, because with current processing power with such methods it is difficult to achieve an acceptable compromise between the robustness and the speed of the object detection.

US 2009/0238466 discloses an object recognition method focused on the identification of faces, wherein the edges of a static image are determined through a pixel categorization and a congruency test.

## SUMMARY OF THE INVENTION

The present method for object detection and image processing can be applied where kernels are used in the frequency domain. It is not applicable to methods that are based on the analysis of pixel information in the spatial domain without transforming the image data into a frequency domain.

Generally, the method of the present invention has the process detailed in the following: objects are detected using features extracted in the frequency domain. These features have been obtained by transforming the original image to the frequency domain and multiplying this transformed image information by one or more kernels in the frequency domain.

In the process, a number of features are first selected and, after, in an offline learning phase wherein parameters such as for the kernels and the features layout are optimized, the best parameter settings are selected. The set of features so describes the model in a frequency domain for an object.

In a deeper detail, the method for extracting and using features in the frequency domain comprises the steps of:

- obtaining a digital image defined through data in a spatial domain;
- transferring a sparse fraction of the total frequency domain data of the image data to the frequency domain using 2D variation of a L-Transformation;
- applying to the transformed frequency domain one or more sparse zones covering together a fraction of the frequency domain, and one or more filtering kernels at least partially overlapping said sparse zones;
- performing a multiplication between the transformed frequency data within each sparse zone and said kernels, combining the results in single values, each representing a corresponding extracted feature;
- using the output of the extracted features to create the input data for a classifier;
- varying the parameters of said sparse zones and/or the kernels, repeating the process of multiplication and extraction until a predetermined accuracy is achieved.

It will be clear to an expert in the field of object detection that there are several possibilities to use as the digital image input:

- The entire image is transformed
- Segments of the image are transformed

It will also be clear that the size of the digital input does not change the claims disclosed here.

Further details of the method, leading to additional advantages, are defined in the dependent claims.

The present method is hence capable to greatly increase the processing speed of object detection and image processing methods, at the same time increasing the accuracy thereof.

As explained above, a huge need is felt for new methods able to increase the speed of object detection techniques in image processing. This speed increase should render the object detection fast enough to work in the background inside the latest generation of mobile devices and other similar devices.

Apart from use on the latest generation of mobile devices, in anticipation of future trends such as wearable hardware, the algorithms need to be able to work outside of the main personal computer operating systems and mobile operating systems and thus be programmable on processors and re-programmable hardware such as field-programmable gate arrays. The methods also need to be built up of algorithms, which can take advantage of the latest hardware developments on personal computers and mobile devices such as multi-cores and powerful graphical processing units (GPU's).

In this connection, the use of calculations in the frequency domain naturally lends itself to respond to the need for faster calculations for several reasons. This method allows for such parallel processing. It is well known by experts in this field that the many variants of FFT are not fit for programming on a processor.

The standard frequency domain theory of Fourier states that any signal, in our case digital images, can be expressed as a sum of a series of sinusoids. In the case of image processing, these are sinusoidal variations in brightness across the image.

A sinusoidal function can encode:

- the spatial frequency
- the magnitude
- the phase

The spatial frequency is the frequency across the space with which the brightness modulates.

The magnitude of the sinusoidal corresponds to its contrast, or the difference between the darkest and the brightest peaks of the image. The phase represents how the wave is shifted relative to the origin.

A Fourier transform encodes not just a single sinusoid, but a whole series of sinusoids through a range of spatial frequencies from zero until the "Nyquist frequency", that means the highest spatial frequency that can be encoded in the digital image, which is related to the resolution, or total number of the pixels.

The Fourier transform encodes all of the spatial frequencies present in an image simultaneously.

The Nyquist frequency is ½ of the sampling rate of a discrete signal processing system, in our case the digital image.

The underlying principle behind the Fourier transformation used for image processing is: that each pixel affects all frequencies, and each frequency affects all pixels."

The intuition behind the method disclosed here is that the position of said contrasts in the spatial domain is encoded by sinusoids in the frequency domain. Certain contrasts in the spatial domain are only affected by certain sinusoids in the frequency domain. For shapes, which are defined by a combination of contrasts in the spatial domain, it means that this shape is captured by a unique combination of positional information in the frequency domain. And it means that movement is captured by a unique change of positional information in the frequency domain.

Therefore, we can use the capturing of a specific information or change of information in the frequency domain for the detection of specific objects.

Working in the frequency domain allows for much easier calculations as multiplications with filters and other similar calculations with matrices are simple component-wise multiplication, unlike in the spatial domain, where it is a convolution between two functions, which is computationally more expensive.

Therefore, the frequency domain allows for a computationally easy use of a sparse, small, part of the frequency domain information for object detection.

Sparse zones, as well as the kernels operated as filters in the frequency domain, will be hereinafter explained and detailed.

Working fully in the frequency domain without requiring the calculations to transform the image back to the spatial domain after the frequency domain calculation also allows an added flexibility in the choice of the mathematics that perform the transformation into the frequency domain

## BRIEF DESCRIPTION OF THE DRAWINGS

Further features and advantages of the present method will become more apparent by the following description of a preferred embodiment thereof, given by reference to the annexed drawings wherein:

- Figure 1 shows how in the spatial domain for an image, the index indicates the position while the frequencies within the image indicate the sinusoidal changes in pixel intensity and the opposite is true within the frequency domain;
- Figure 2 shows how movement information in the spatial domain for a given object will be captured by a change in the waves that code the position in the frequency domain;
- Figure 3 shows how in the frequency domain a number of waves are required to capture enough positional and shape information to classify the object within the image;
- Figure 4 shows how only a sparse part of the frequency domain information is required to capture the sinusoidal information in the frequency domain;
- Figure 5 and Figure 6 show how a full 2D implementation of Göertzel in effect would be a combination of many 1D Göertzel calculations;
- Figure 7 shows how a full 2D implementation will computationally not be ideal;
- Figure 8 shows how a full 2D implementation can be made faster, even if still not ideal;
- Figure 9 shows how it is efficient if the result of the index is taken by separately calculating the 1D output for the row and column at the index and then combining this into a single value;
- Figure 10 shows how the computations can be made faster; the input cells for the transformation into the frequency domain are only taken around the position of the index for which the value is needed;
- Figure 11 shows how 2 input axis followed to get a result in a given index don’t even need to be along the row and column;

- Figures 12A, 12B and 12C show examples of discrete digital filters;
- Figure 13 shows how much less noisy the frequency domain data is using this method;
- Figure 14A and Figure 14B show how a specific movement of an object in the spatial domain, in this example head orientation, correlates to a unique change of information in the frequency domain;
- Figure 15 shows how the input image is processed in the frequency domain;
- Figure 16 shows a high-level overview of the offline-learning phase;
- Figure 17 and 18 show the same offline learning phase of Figure 16 in more detail;
- Figure 19 shows how the values from each index in each feature, which follow from the discrete digital filters and kernel parameters, are combined;
- Figure 20 shows how these normalised outputs can be used in the training phase;
- Figure 21 shows how the [min, max] of the positives and negatives for a given trained feature will be discriminative;

**DESCRIPTION OF THE EMBODIMENTS**

In the following, an embodiment of the method according to the present invention will be detailed with reference to the accompanying figures.

It is apparent that what is herein described with reference to a video stream, i.e. a succession of a series of image frames having a certain rate, also applies to any succession of single images, being equivalent to the frames of a video stream, and to one single image being equivalent to a single frame.

In the first step, a search logic can be used on the full input image to generate an input frame for the calculations of this method. The search logic can for example be the whole image or a subset of the image. It should be clear that many types of search logic are possible, but that from the point of view of the method disclosed here the calculations or claims do not change, just the image input for the transformation changes. It will also be clear that a single frame can have multiple inputs for multiple calculations each of which are processed as described in the claims.

The input or inputs taken from the frame are then extracted in the frequency domain. The data within the frequency domain data of the frame is then processed to detect the object, using the classifier parameters trained in an off-line phase.

The detection will move to the next frame of the video stream when either the object has been detected or a repetition of the search logic fails to find the object within the image. It should be clear that the search logic can be made to be adaptive, based on which object were found in the previous frame.

In the known art, processing an image in the frequency domain is generally done using a variant of the Fast Fourier Transform (FFT), but the present method neither uses FFT or its variants, for example Discrete Cosine Transform (DCT), nor uses a Discrete Fourier Transformation (DFT).

However, to highlight the differences between the conventional image processing and the present method, a generic overview of FFT and DFT is herein given.

FFT is used in a wide range of applications, such as image analysis, image reconstruction and image compression, text recognition and more.

The main principle of the FFT follows from the Discrete Fourier Transformation (DFT). Since the DFT requires a great number of calculation, there are other types of transformations which seek to speed up the process. The Fast Fourier Transformations (FFT) is the most established of these. With DFT, the number of calculation is correlated to $N^2$, where N is the length of the input matrix.

FFT algorithm relies on the fact that the standard DFT involves a lot of redundant calculations.

The FFT is computed by dividing the sample sequence into sub-sequences; at each stage N/2 complex multiplications are required to combine the results of the previous stage.

Since there are log(N) stages, the number of complex multiplications requires to evaluate on N-point DFT with the FFT is approximately N*log(N).

The number of frequencies corresponds to the number of pixels in the spatial domain image, i.e. the images in the spatial and frequency domain are of the same size.

As mentioned above, there are a number of variants of the FFT. The FFT also has its limitations in image processing. For example, the sides of the image used in input for the FFT need to have lengths in pixels which are a power of two.

Another limitation is that the full FFT needs to be calculated before results for a certain frequency can be given. In other words, the FFT cannot be converted for sparse calculations, since the entire FFT must be calculated before the value for a single frequency can be obtained. The complex structure of the FFT also does not allow for easy coding implementations on re-programmable hardware and multicore processors. In addition, since the entire FFT first needs to be calculated to obtain single results it also requires higher use of memory on the device.

Methods, such as pruned Fast Fourier Transformations, may be provided, but they require a great deal of complex code for a relatively small gain in speed and memory use, while still being hard to implement on re-programmable hardware.

In the spatial domain, the values are usually the light intensity of the pixels, which range from 0 to 255. The Fourier domain values of the same image have a much greater range than the image in the spatial domain.

The Fourier Transform produces a complex number valued output image, which can be displayed with two images, either with the real and the imaginary part or with magnitude and phase. In the image processing, often only the magnitude of the Fourier Transform is displayed, as it contains most of the information of the geometric structure of the spatial domain image. However, to re-transform the Fourier image into the correct spatial domain after some processing in the frequency domain, one must preserve both magnitude and phase of the Fourier image.

In the method according to the present disclosure, all the object detection calculations are done exclusively using the information in the frequency domain. Since there is no need to keep all the information to return to the spatial domain, there are several advantages.

First, the lack of an extra step back to the spatial domain from the frequency domain speeds up the overall calculations.

Secondly, since the frequency domain data need not to be converted back to a correct spatial domain image, smaller sparse zone can be used. This is because it is not required to have the frequency domain data that will allow for the image data to be converted back to the spatial domain without a large loss of image quality and information. Sparse zones in the frequency domain by themselves do not necessarily contain enough frequency domain information to recreate the spatial image. But they contain enough information for image classification.

Thirdly, extra calculations can be carried out to remove the aliasing that is common in FFT and also other calculations to better prepare the data for classification within the frequency domain.

This extra information is represented in Figure 1 where it can be seen how, in the spatial domain for an image, the index indicates the position while the frequencies within the image indicate the sinusoidal changes in pixel intensity. The opposite is true within the frequency domain, the index shows the frequencies, while the sinusoidal waves contain the position data.

In the same way, movement information in the spatial domain for a given object will be captured by a change in the waves that code the position in the frequency domain. This is schematically shown with images of eye movements in Figure 2.

The examples given above are of course simplified for illustrating the concepts. In practice, in the same way that in the spatial domain many frequencies which capture changes in pixel intensity are required to draw an image, in the frequency domain a number of waves are required to capture enough positional and shape information to classify the object within the image. This is represented within Figure 3.

As mentioned above, each index within the frequency domain affects all pixels in the spatial domain. Therefore, relatively less features are required in the frequency domain to classify an object, compared to classifying an object with features extracted from the spatial domain. In the object detection method herein described a technique is disclosed to find the minimal partial combinations of information in the frequency domain that capture a specific type of shape in the spatial domain.

Here and in the following description, a sparse zone is meant to be a selection of information, covering a fraction of a frequency domain. Each zone should be seen as a combination of frequency intervals, possibly defined through intervals on the X and Y axis. Figure 4 shows examples of possible shapes of sparse features in the frequency domain. Note that the size of the frequency domain grid is for illustrative purposes only and can be many other sizes as will be illustrated later. Figure 4 shows an example of a possible wave that captures position and movement in the spatial domain is also shown in overlay. What Figure 4 shows is that only a part of the wave needs to be captured, which is what the sparse zones do.

The sparse zones may be grouped together, either possibly partially overlapping each other or placed side-to-side, to increase the local resolution.

Calculations on frequency values derived from said sparse zone are indicated as sparse calculations.

Since it is not required to convert the image back to the spatial domain, and not all the frequency domain information is required, it opens to the possibility to use other methods besides DFT or FFT to convert the image into the spatial domain.

Hence, the transformation may be carried out using further methods such as a two-dimensional version derived from the Göertzel algorithm, combined with a choice of discrete digital filters. As will be explained further on in this disclosure, the method used is very different to the Göertzel algorithm and so the description used is that it is a 2D variation of the L-Transformation.

As mentioned before, the advantage of this method is that it can be set up sparsely, in a more flexible way for use on re-programmable processors or on GPU, while using a minimal amount of memory. In the following, the theory behind the Göertzel transformation is first described. After that the implementation for this method is detailed, with the extension for the 2D case in image processing and the various tuning options and discrete digital filters that can be used.

When a spectrum analysis in the detection and measurement of a single sinusoidal tones has to be performed, an infinite impulse response (IIR) filter structure is used.

The standard method for spectral energy is the discrete Fourier transform (DFT), typically implemented using a fast Fourier Transform (FFT) or Discrete Cosine Transformation (DCT) algorithm.

However, there are applications that require spectrum analysis only over a subset of the N-bin centre frequencies of an N-point DFT. A popular, as well as efficient, technique for computing sparse FFT results in 1D is the Göertzel algorithm, using an IIR filter implementation to compute a single complex DFT spectral bin value based upon N input time samples.

The most common application of this process it to detect the presence of a single continuous-wave sinusoidal tone. Being a 1D calculation, the Göertzel algorithm is not meant to be used for image processing, where images are 2D.

The Göertzel algorithm is based on the idea to compute the k component of the signal $\{x[n]\}$ of length $N$

$$X[k] = \sum_{n=0}^{N-1} x[n]\, e^{-j2\pi k \frac{n}{N}} \qquad \text{(Equation 1)}$$

Multiplying the right side of this equation (1) by $e^{j2\pi k \frac{n}{N}} = 1$ we have:

$$X[k] = e^{j2\pi k \frac{n}{N}} \sum_{n=0}^{N-1} x[n]\, e^{-j2\pi k \frac{n}{N}} \text{(Equation 2)}$$

which can be written as:

$$X[k] = \sum_{n=0}^{N-1} x[n]\, e^{-j2\pi k \frac{n-N}{N}} \qquad \text{(Equation 3)}$$

the right side of (3) can be seen as a discrete linear convolution of signals $\{x[n]\}$ and $\{h_k[n]\}$, where $h_k[l] = e^{j2\pi k \frac{l}{N} u[l]}$. In fact, if $\{y_k[n]\}$ denotes the result of that convolution, then we have: $\{y_k[n]\}$

$$y_k[m] = \sum_{n=-\infty}^{\infty} x[n]\, h_k[m-n] \qquad \text{(Equation 4)}$$

which can be rewritten as:

$$y_k\left[m\right]=\sum_{n=0}^{N-1}x\left[n\right]e^{-j2\pi k\frac{m-n}{N}}u\left[m-n\right] \qquad \text{(Equation 5)}$$

A convolution is defined as the integral of the product of two functions after one is reversed and shifted. As such, it is a particular kind of integral transform.

The convolution theorem states that under suitable conditions the Fourier transform of a convolution is the pointwise product of Fourier transforms. In other words, convolution in one domain (e.g., time domain) equals point-wise multiplication in the other domain (e.g., frequency domain)

Comparing (3) with (5) it is obvious that the desired $X[k]$ is the *Nth* sample of the convolution:

$$X\left[k\right]=y_k\left[N\right] \qquad \text{(Equation 6)}$$

for k=0,...,N-1. This means that the required value can be obtained as the output sample in time N of an IIR linear system with the impulse response $\{h_k[n]\}$.

The transfer function $H_k(z)$ of this system will now be derived; it is the L-Transform of its impulse response:

$$H_k\left(z\right)=\sum_{n=-\infty}^{\infty}h_k\left[n\right]z^{-n} \qquad \text{(Equation 7)}$$

$$=\sum_{n=-\infty}^{\infty}e^{j2\pi k\frac{n}{N}}u\left[n\right]z^{-n} \qquad \text{(Equation 8)}$$

$$=\sum_{n=0}^{\infty}e^{j2\pi k\frac{n}{N}}z^{-n} \qquad \text{(Equation 9)}$$

$$=\sum_{n=0}^{\infty}\left(e^{j2\pi k\frac{n}{N}}z^{-1}\right)^{n} \qquad \text{(Equation 10)}$$

the geometric series is convergent and its sum equals the transfer function:

$$H_k\left(z\right)=\frac{1}{1-e^{j\frac{2\pi k}{N}}z^{-1}} \qquad \text{(Equation 11)}$$

This gives the following difference equation:

$$y_k\left[n\right]=x\left[n\right]+e^{j\frac{2\pi k}{N}}y_k\left[n-1\right] \qquad with\ y_k\left[-1\right]=0$$

(Equation 12)

Equation (12) involves multiplication by a complex number and each complex multiplication results in four real multiplications and four real additions.

To avoid complex multiplication, the function can be multiplied by a complex conjugate pole and simplified as follows:

$$H_k\left(z\right)=\frac{1-e^{-j\frac{2\pi k}{N}}z^{-1}}{1-2\cos\left(\frac{2\pi k}{N}\right)z^{-1}+z^{-2}} \qquad \text{(Equation 13)}$$

The difference equation of this IIR of second order is:

$$y_k[n] = x[n] - x[n-1]e^{-j\frac{2\pi k}{N}} + 2\cos\left(\frac{2\pi k}{N}\right)y_k[n-1] - y_k[n-2]$$

(Equation 14)

and such structure can be described using the state variables:

$$s[n] = x[n] - x[n-1]e^{-j\frac{2\pi k}{N}} + 2\cos\left(\frac{2\pi k}{N}\right)s[n-1] - s[n-2]$$

(Equation 15)

and we set s[-1] = s[-2] = 0.

$$y_k[n] = X(k) = s[n] - s[n-1]e^{-j\frac{2\pi k}{N}} \quad \text{(Equation 16)}$$

$$y_k[n] = s[n] - e^{-j\frac{2\pi}{N}k}s[n-1] \quad \text{(Equation 17)}$$

$$= A - Be^{-j\theta} \quad \text{(Equation 18)}$$

$$= [A - B\cos\theta] + jB\sin\theta \quad \text{(Equation 19)}$$

$$A = s[n]$$

$$B = s[n-1]$$

$$\theta = \frac{2\pi k}{N}$$

The Göertzel algorithm in fact performs the computation of a single 1D DFT coefficient. Compared to the DFT, it has several advantages and for this reason it is sometimes used in 1D applications.

- The Göertzel algorithm is advantageous in situations when only values of a few spectral components are required, not the whole spectrum. An example is the recognition of the press of a button which has a specific audio pulse. In such a case the algorithm can be significantly faster.
- The efficiency of using the FFT algorithm for the computation of DFT components is strongly determined by the signal length N (N has to be a power of 2). In contrast, N can be arbitrary in the case of the Göertzel algorithm, and the computation complexity does not vary.
- The computation can be initiated at an arbitrary moment, it is not necessary to wait for the whole data block as in the case of the FFT. Thus, the Göertzel algorithm can be less demanding from the viewpoint of the memory capacity, and it can perform at a very low latency. Therefore, the Göertzel algorithm does not need any reordering of the input or output data in the bit-reverse order.

**1D Göertzel Algorithm**

The algorithm for the 1D Göertzel has a quite basic structure. We can start from the Equation (17).
Some intermediate processing is done in every sample. As with FFT, we work with blocks of samples.
Several settings are required to initialize the calculation of the 1D Göertzel:

1. The sampling rate.

2. The block size, N.

3. The target frequency.

Once the sampling rate and block size are selected, there is a five-step process to compute the constants needed:
The constants *k, w, cosine, sine* and *coeff* are defined:

$$\text{k}=(int)\left(0.5+\frac{N*target-freq}{sample-rate}\right)$$
$$\text{w}=(2\pi/N)*k$$
$$\text{cosine}=\cos w$$
$$\text{sine}=\sin w$$
$$\text{coeff}=2*\text{cosine} \qquad \text{(Equation 20)}$$

For the per-sample processing three variables are used: $S_0$, $S_1$, and $S_2$. $S_1$ is simply the value of $S_0$ *at the last iteration.* $S_2$ is the value of $S_0$ *two iteration step ago* (or in other words one iteration before $S_1$ ). $S_1$ and $S_2$ must be initialized to zero at the beginning of each block of samples.
For every column (row) of a matrix [*n x m*] the following three equations are computed:

$$\{\,\text{S}_0 = coeff * S_1 - S_2 + sample$$
$$\text{S}_2 = S_1$$
$$\text{S}_1 = S_0$$
$$\text{real}=(\text{S}_1 - S_2 * cosine)$$
$$\text{imag}=(\text{S}_{2*} sine)$$
$$\text{magnitude}^2 = real^2 + imag^2\} \text{ (Equation 21)}$$

This is the basic version of the 1D Göertzel algorithm. As mentioned above, it gives the same result as a 1D DFT.
A version of the 1D Göertzel can also be used which requires less computations than the basic version, at the expense of the phase information.
The per-sample processing is the same, but the end of block processing is different. Instead of computing real and imaginary components, and then converting those into the relative magnitude squared, the following is directly calculated, without the steps of the basic version where also the real and imaginary components are calculated:

$$\text{magnitude}=\text{S}_1^2 + S_2^2 - S_1 * S_2 * coeff \text{ (Equation 22)}$$

**2D implementation of version of L-Transformation**

It should be noted again that this common version of the Göertzel algorithm is defined for 1D calculations. In image processing the calculations this does not suffice as the calculations for transforming an image into the frequency domain need to be done in two dimensions: X and Y. Also, while a 1D implementation of Göertzel is equivalent to a 1D DFT, for 2D this will not be true. So the Göertzel algorithm would not seem to be a candidate for object detection and image processing.
However These disclosures describe the method with which to convert images to the frequency domain with a 2D implementation, starting from the principles of the 1D Göertzel algorithm, but changing them to the extent that it can be called a completely new method in 2D, herein described as a 2D variant of the L-Transformation. Also, since the calculations in this method are fully in the frequency domain, without needing to return to the spatial domain, it is not a requirement that the 2D calculations are equivalent to the 2D DFT.

Figure 5 and Figure 6 show how a full 2D implementation of Göertzel in effect would be a combination of many 1D Göertzel calculations.

An option would be first to do the various 1D calculations of the rows of Figure 5 then to use these results for a second step where all the 1D Göertzel calculations are done for the columns, like in Figure 6. Alternatively, the columns could first be calculated followed by the rows.

Even though the method described here could use such an implementation, it is not the preferred way for several reasons. Firstly, the calculations for the rows would have to wait for the calculations for the columns to finish, or vice-versa. Meaning that parallel processing would not be possible. Secondly, the calculations would still not be truly sparse. Figure 7 illustrates this. In the figure the required calculations are shown for a 2D implementation where the frequency domain value in the index (i, j) is required. In Figure 7 the option is shown where first the rows are calculated then the columns. The 1D calculations would first have calculated the values for each row at index i. After this the 1D calculation for the column can be calculated be done to get the value at index j. It will be clear that computationally this is not ideal. It will also be clear to experts in the field of frequency domain transformations that a 2D implementation of Göertzel will change the data in such a way that the original image cannot be re-created in a return to the spatial domain. However, as stated before this method describes the classification of data by solely using the frequency domain date. Therefor the driver in the method described here is to have as fast as possible calculations generating the best possible input for the classifiers instead of the driver being the spatial domain data.

Next this disclosure will describe a series of options to have faster calculations and the best possible input data for the classifiers.

These are, among others:

- Ignoring the imaginary part of the calculations;
- Directly calculating the value of the index for the row and the column;
- Combining the result of the row and column calculations in different ways;
- Using different discrete digital filters as input for the loops;
- Calculating the outputs for an index without using all the inputs of a row or column.

As noted above, since the frequency domain data serves as an input for the classifiers instead of the re-creation of the original image, an option in this method is to ignore the imaginary part of the transformations, to speed up the calculations. It will be clear that this option would only be used if used with settings that improve the input data for the classifiers.

The calculations can be made sparser than the example in Figure 7. One way is as shown in Figure 8, where the input cells for the transformation into the frequency domain are only taken around the position of the index for which the value is needed. However, this would still require the rows to wait for the results of the columns, or vice versa. An advantage would be that the length of the amount of cells could become an input parameter, allowing for more differentiation between features, while it could also be possible to capture details of the object being classified.

A more effective calculation is shown in Figure 9. Here the result of the index is taken by separately calculating the 1D output for the row and column at the index and then combining this into a single value. Apart from the gain in speed, the biggest advantage in this manner is that it makes no difference if the 1D for the row or the 1D for the column is calculated first, so the value for the row and column can be calculated in parallel. An even great speed gain can be achieved by limiting the length of the input as shown in Figure 10, where in this case only a single row and column input need to be calculated.

The amount of freedom to train the classifiers with frequency domain input data becomes even greater if you consider that the 2 axis followed to get a result in a given index don't even need to be along the row and column, as Figure 11 shows.

In the case where the 2 inputs for the value in the index are calculated independently like in Figure 9 and Figure 11, the next step would be to combine them into a single value. Also here there is the design freedom for the training of the classifiers to do this in different ways, since the value for the row and column are calculated independently they can also be combined in different ways into a single value.

For example, this can be done using:

$$output_index_{(i,j)} = \sqrt{result(row)_i^2 + result(col)_j^2} \quad \text{(Equation 23)}$$

$$output_index_{(i,j)} = result(row)_i + result(col)_j \quad \text{(Equation 24)}$$

$$output_index_{(i,j)} = result(row)_i * result(col)_j \quad \text{(Equation 25)}$$

$$output_index_{(i,j)} = \left| \left( \left( result(row)_i * result(col)_j^2 \right) - \left( result(row)_i^2 * result(col)_j \right) \right) \right|$$

(Equation 26)

It will be clear that many other options can be created, all based on the same principle of calculating the row and column values independently and then combining them into a single value for the frequency domain output for that index.

It will also be clear that in this method, where row and column can be calculated in parallel, one has even more control of the data that will be the input for the classifier. Figure 11 also shows how one could take the data using a freely chosen numbers of axis, which need not even be parallel with the row and columns, without changing the principles used in this method.

The number of calculations required to obtain the value in an index will have been strongly reduced in the method described. The values obtained in this way will still be strongly correlated with the shape information in the frequency domain, while also allowing a lot of control de reduce effects like aliasing and periodic signals. The reduction of these effects is important because one key aim is to have a unique result in each index. Here it needs to be noted again that for this method it is not required to have all the data to rebuild the image in the spatial domain. The goal is the capturing of the frequency domain information that sparsely encodes position and movement of the object being detected.

Returning to the 1D calculations along each row or column, which do not use the imaginary part of the calculations, we can re-write them as follows:

$$\begin{aligned} k &= (int)\left(0.5 - \frac{N - target_freq}{sample - rate}\right) \\ w &= (2\pi/N) * k \\ coeff &= digital_filter \end{aligned} \quad \text{(Equation 27)}$$

$$\begin{aligned} S_0 &= coeff * S_1 - S_2 + sample \\ S_2 &= S_1 \\ S_1 &= S_0 \end{aligned} \quad \text{(Equation 28)}$$

$$magnitude^2 = S_1^2 + S_2^2 - S_1 * S_2 * coeff \quad \text{(Equation 29)}$$

$$\begin{aligned} digital_filter_{Goertzel} &= 2 * cos(\omega) \\ digital_filter_0 &= abs(cos(\omega)) \\ digital_filter_1 &= abs(sin(\omega)) \\ digital_filter_2 &= cos(2\omega) * sin(\omega) \\ digital_filter_3 &= cos(2\omega) \\ digital_filter_4 &= sin(2\omega) \end{aligned} \quad \text{(Equation 30)}$$

We see how for 2*cos($\omega$) the calculations are the same as for Equation 20. In this method this input is used as another variable for the training of the classifiers. In this method an option is to use other periodic signals as the input, as shown in the list of equation 30. It will be clear that many different periodic signals can be used as an option for this input. What it shows is how any discrete digital filter can be used for this method. For example, instead of the various periodic signal, one can also use a lookup table as the digital filter input.

Figures Figure 12A, Figure 12B and Figure 12C give examples of possible lookup tables that can be used as discrete digital filters.

Clearly, many types of lookup tables can be created as digital filter input, meaning that the designer using the method described has a great number of options to train the algorithms.

It should be noted that these discrete digital filter options can be chosen separately for each for the 1D row and 1D column, meaning that the 1D row and 1D column can have different discrete digital filter settings.

As mentioned before, one of the advantages of this method is that the many options described also allow the frequency domain data to be cleaned before being used as an input for the classifiers.

It will be clear that at this point the calculations in this method are very different from the theory that uses the L-Transformation (Equation 7) to create the Goertzel algorithm. It is also substantially different from the Z-Transformation, which is connected to the L-Transformation. For the sake of the description, we call here the transformation used in this method a 2D variation of the L-Transformation

In Figure 13, an example is given of how much the described method can clean the data to give better input for a classifier. The left plot has been generated by converting an image to the frequency domain with this method, while the right plot is the same input image but converted with FFT. Note that for the sake of the example with the comparison the size of the input image has been chosen as a power of 2 (32*32). However when using the discrete digital filters of this method in practice there is no limitation in size such as for FFT.

Figure 14A and Figure 14B show how this method also allows for better capturing of movements. In Figure 14A a same type of comparison is shown as for Figure 13. The combination of row and column indexes, discrete digital filter settings, sparse zones and other settings linked to this method, have been trained in such as way as to sparse react to head orientations. We see in the left plot of Figure 14A how not only the data has been cleaned up, but also that a specific peak is generated, with the magnitude and position of said peak being correlated to the head orientation. We see in Figure 14B how the peak has shifted with the head orientation movement. In the image transformed with FFT there is so much noise, which continuously changes which the head orientation changes, that this same movement cannot be captured at all.

Figure 14A and Figure 14B also show an example of sparse zones chosen to capture the head orientation movement. The optimizations will obviously choose the positions of these sparse zones close to the peak that correlates to head orientation, if head orientation is the characteristic to be captured in the frequency domain. It will be clear that in this example head orientation is only chosen for illustrative purposes, and that the same principles will be true for any object or movement to be captured.

It will be clear to a man skilled in the art that with this method only the frequency domain values in the indexes that contain the features need to be calculated. While in the case of using FFT, all values in the frequency domain would have to be calculated, since FFT cannot be calculated sparsely. It is also important to underline again that this method does not have the limitation of input size like FFT. And as states above it will also be clear that head orientation is just an example and more shape changes or movements of trained object can be captured with this method.

In the next section the selection of the kernels will be discussed, followed by a description of the training of the algorithms. Kernels and offline training are part of any type of algorithms in object detection within images. The following descriptions of kernels and are therefore mainly in the context of how the values that follow from the frequency domain inputs are used.

Figure 15 shows the high-level flow diagram of object detection, in which the offline learning phase is indicated.

Figure 16 shows the offline-learning block on a high level, how robust training and test sets need to be chosen that capture enough input images of the classifier that has to be learned using the underlying calculations of this method.

In Figure 17 shows this off-line learning phase is outlined, to find the best settings to train the method for a certain object.

We see in Figure 17 how for example the earlier described discrete digital filter settings are optimized to best extract the frequency domain data from the input image in preparation for the classifier. Figure 17 also shows that the feature layouts can be optimised and we see also how kernels can be used on top of this frequency domain data. These can be Gabor-type kernels or wavelet-type kernel or any other kernel type. The principle is the same, with the frequency domain data that is extracted from the image being multiplied cell-by-cell in the frequency domain with the kernel. It will be clear that this gives many other tuning parameters for training the classifiers. There are also other classifier parameters that can be optimised, based on the type of classifier chosen to be trained with the frequency domain data.

Figure 18 shows the optimization loop of the offline-learning block on a high level.

It is apparent that the offline learning step starts with the creation of a database of the type of images to be classified or tracked, as shown in Figure 16.

To do that, and to have it as much generic as possible, the images collected should be different from each other on the bases of for example:

- light condition
- orientation
- scales or zooms

This is important, because much of the robustness of the classifier depends on the images that the database contains. The images set of the defined object is split in training and test set. The first one, is used to train the detector, the second one to validate the current model.

Once that the database is completed, optimization described in Figure 32 can start. This is shown in Figure 17 and Figure 18. A plurality of parameters in the optimization loop are now varied until, an acceptable result is found, i.e. a predetermined accuracy. These parameters can be related to the sparse zones, the features layout, the kernel settings and amount of kernels used, the classifier settings and the Gaussian filtering parameters. The Gaussian parameters will be described in more detail later.

The optimization loop can seek a best result within multiple targets, among those the classification percentage (accuracy, recall, precision), and the achieved speed of calculations. Further, it is apparent that there are also higher order design options for the parameters. For example, the sparse zones can be set square or rectangular or even of a different shape; as for the kernels, the kernels parameters could be changed using filters described with a mathematical formula.

Alternatively, the individual kernels values within the sparse zones can be directly varied although these values are the output of a mathematically defined filters.

It should be noted that a number of combinations between kernels and features are possible, and that the chosen features and kernels can overlap each other. It is also clear that the kernels, whose result from this optimization are not predefined such as in methods similar to Gabor banks, will be different for each class.

Note also that a classifier is built up from a plurality of features, with each feature possibly having different settings, different kernels, different sets of features within the defined sparse zones, different discrete digital filter settings and so forth.

It will also be clear that all parameters of the optimization need not necessarily to be used to achieve acceptable results. It will also be clear that the whole optimization need not be repeated every time.

Kernel is meant to be any kind of filter in frequency domain, to be applied to the sparse zones as defined above.

Such filter can be an edge detection linear filter, a Gabor filter (mixed Gaussian and Sinusoid), a Gaussian filter, an intensity enhancing filter, a lowpass filter, a Sobel edge detection filter, another edge operator like Canny, Canny-Deriche, Differential Sobel, Prewitt, Roberts, Cross, a corner detection operator like Harris operator, Shi and Tomasi, Level curve curvature, SUSAN, FAST, Wavelets and many others.

In the following, a Gabor filter by way of example.

That kernel in frequency domain, involved the following parameters:

- wavelength
- bandwidth
- phase
- orientation

The best setting that will be the output of the so called "batches" guarantees to discard the sinusoidal waves that are not discriminative for the specific object.

It will be clear that since the chosen kernel is a mathematical function, it can be calculated sparsely only in the indexes that have been chosen by the feature optimisations. This method also allows for multiple kernels to be used at the same time. Either for each feature or more than one kernel for a given feature.

Another important step in the optimizations are the features layout selection. Figure 4 showed how only a sparse part of the frequency domain information is required to capture the sinusoidal information in the frequency domain.

Figure 19 shows how the values from each index in each feature, which follow from the discrete digital filters and kernel parameters, are combined.

A feature is defined by 2 zones. Each zone is defined by a selection of indexes in the frequency domain. For each zone the sum is calculated of the values for each index that follow from the discrete digital filter settings and chosen kernel for that feature. This sum is then multiplied by a different weight for each zone, with this weight being negative for one of the zones and positive for the other zone.

The value for a feature will be scaled, taking the sum of the two zones, and dividing the entire feature by that sum. With this calculation each feature will be normalized between -1 and 1.

For a given image a feature with output a single normalised value. I will be clear that when working in the frequency domain, where values can have huge orders of magnitude of difference, the use of such a normalization is highly advantageous.

Figure 20 shows how these normalised outputs can be used in the training phase. Figure 19 showed that a single input image gives a single value. If one takes a plurality of images these will most likely each have a different output value. Used training and test set of images will then generate an output of values, within a range for the positives of [min, max] which will be within [-1,1] with the normalization, and also a range [min, max] for the negatives in the training and test sets.

Many type of classifier can be used to train on these output values.

Figure 21 shows how the [min, max] of the positives and negatives for a given trained feature will be discriminative. Positive and negative images used as inputs will both be normalized and overall fall in different ranges. This can be interpreted as a certain shape sparsely being captured in the frequency domain being more typical for positives than negatives. It will be clear that with a successful training phase these differences can be increased. It will also be clear that the more features are trained the more shapes are captured which define the positives and that the combination of these features can define the shape of the object to be classified.

## Claims

**1.** Method of object detection to be carried out by an electronic processing unit, based either on images or on a digital video stream of images, the images being defined by a frame, wherein the spatial domain content of the frames is transformed into corresponding frequency domain content of the frames, and wherein at least two sparse frequency zone of said frequency domain content of the frames are selected so as to transfer the image data within said sparse zones to the frequency domain, comprising the steps of:

- applying a L-transformation to the frequency input of said sparse zone, *choosing at least one adaptation of the function that follows from the L-transformation,* separately with respect to two axis (X, Y), then combining them in a single value, and applying to them one or more filtering kernels at least partially overlapping said sparse zones;
- performing a convolution between the transformed frequency data within each sparse zone and said kernels, combining the results in single values, each value representing an extracted feature;
- normalizing the frequency domain data of the above pair of sparse zones using only frequency domain data present in said sparse zones;
- inputting the extracted features of the normalized frequency domain data in a classifier, therefore obtaining the data for object detection or visual saliency to use for video compression.

**2.** Method of object detection according to claim 1, wherein a search logic is used on the full input image to generate an input frame where said sparse zones are identified.

**3.** Method of object detection according to claim 1, wherein said sparse zones are grouped together, either possibly partially overlapping each other or placed side-to-side, to increase the local resolution.

**4.** Method of object detection according to claim 1, wherein the computation with respect said two axis are carried out in parallel.

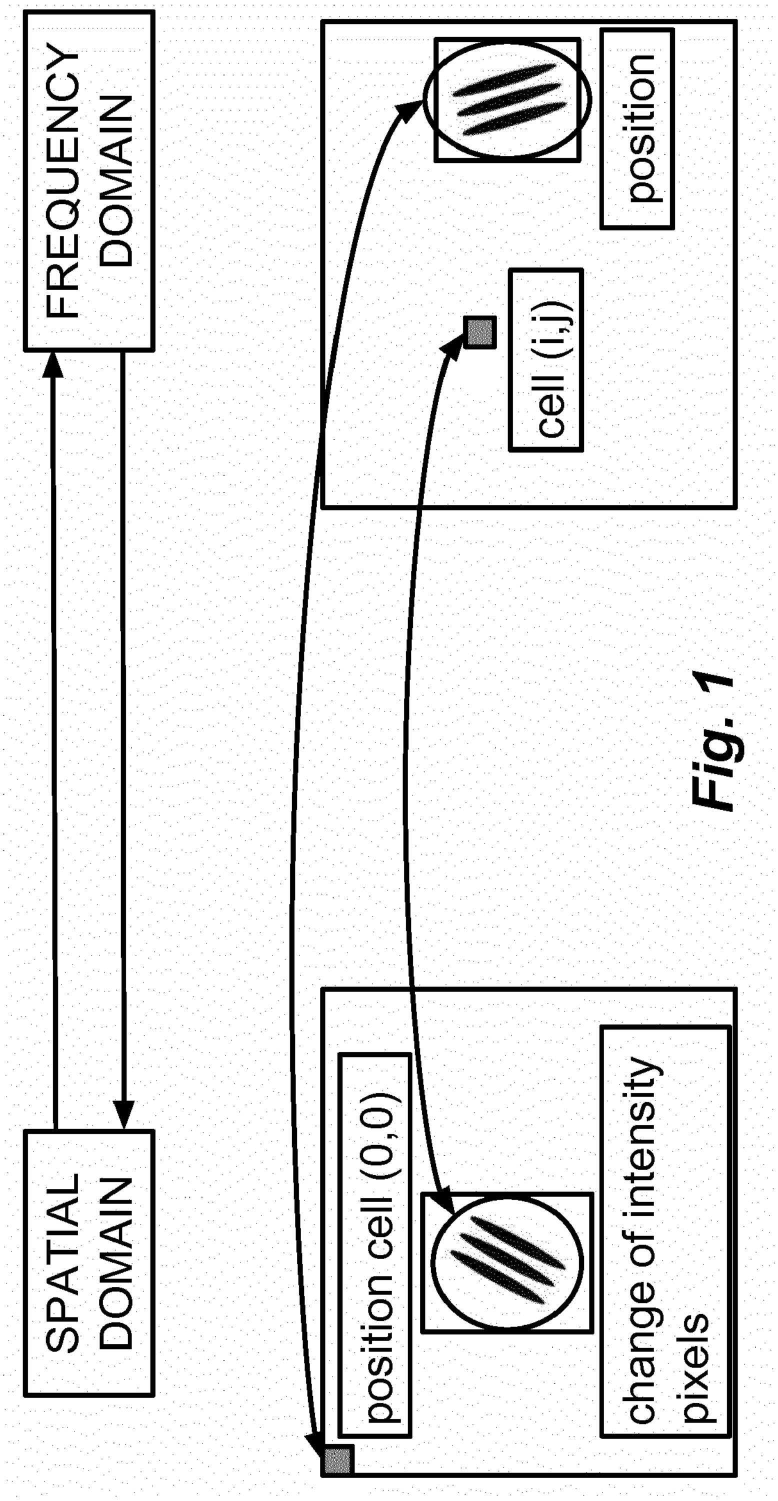
FREQUENCY DOMAIN
SPATIAL DOMAIN
position
cell (i,j)
position cell (0,0)
change of intensity pixels

Fig. 1

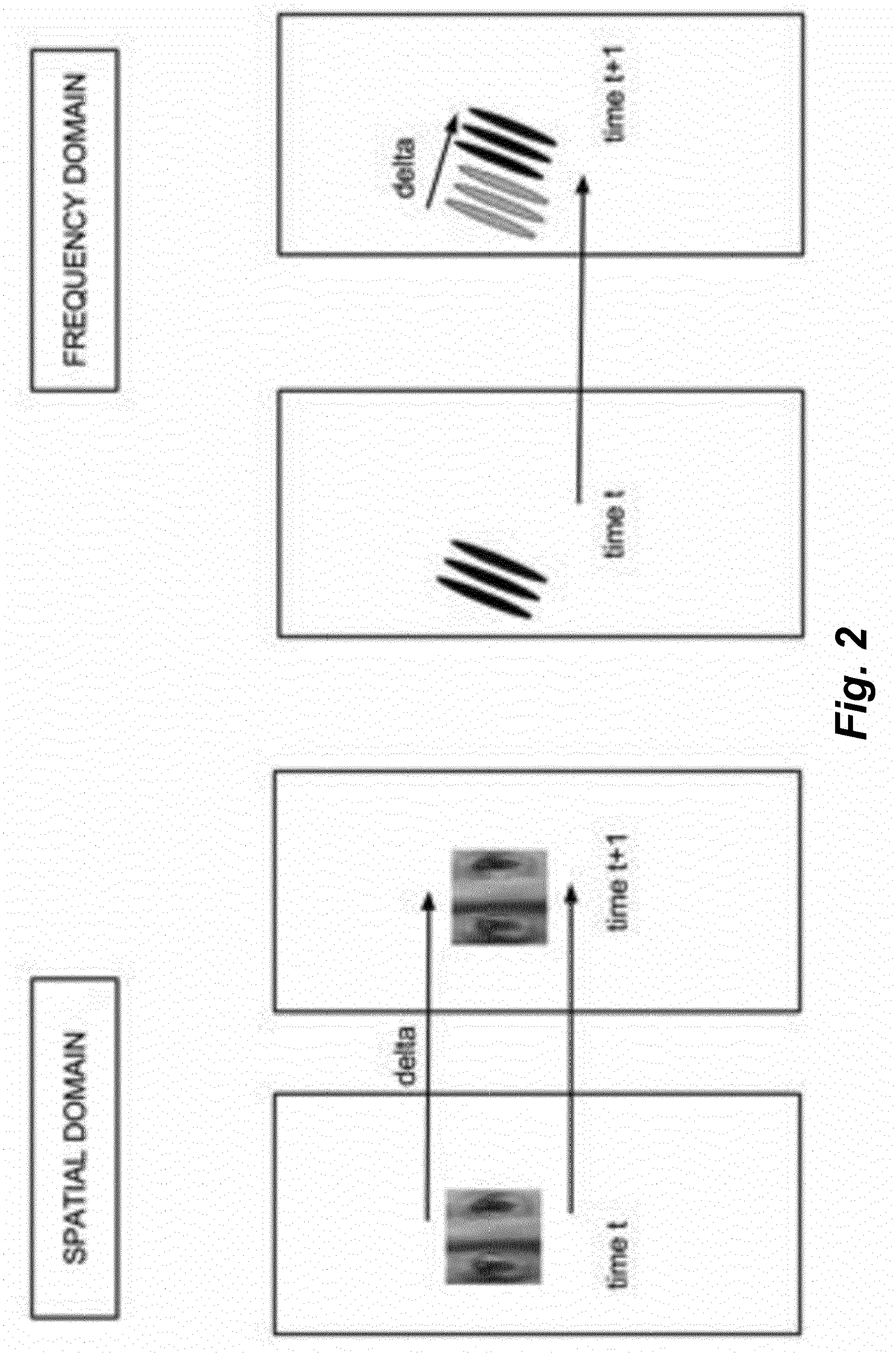
SPATIAL DOMAIN
FREQUENCY DOMAIN
delta
time t
time t+1
delta
time t
time t+1

*Fig. 2*

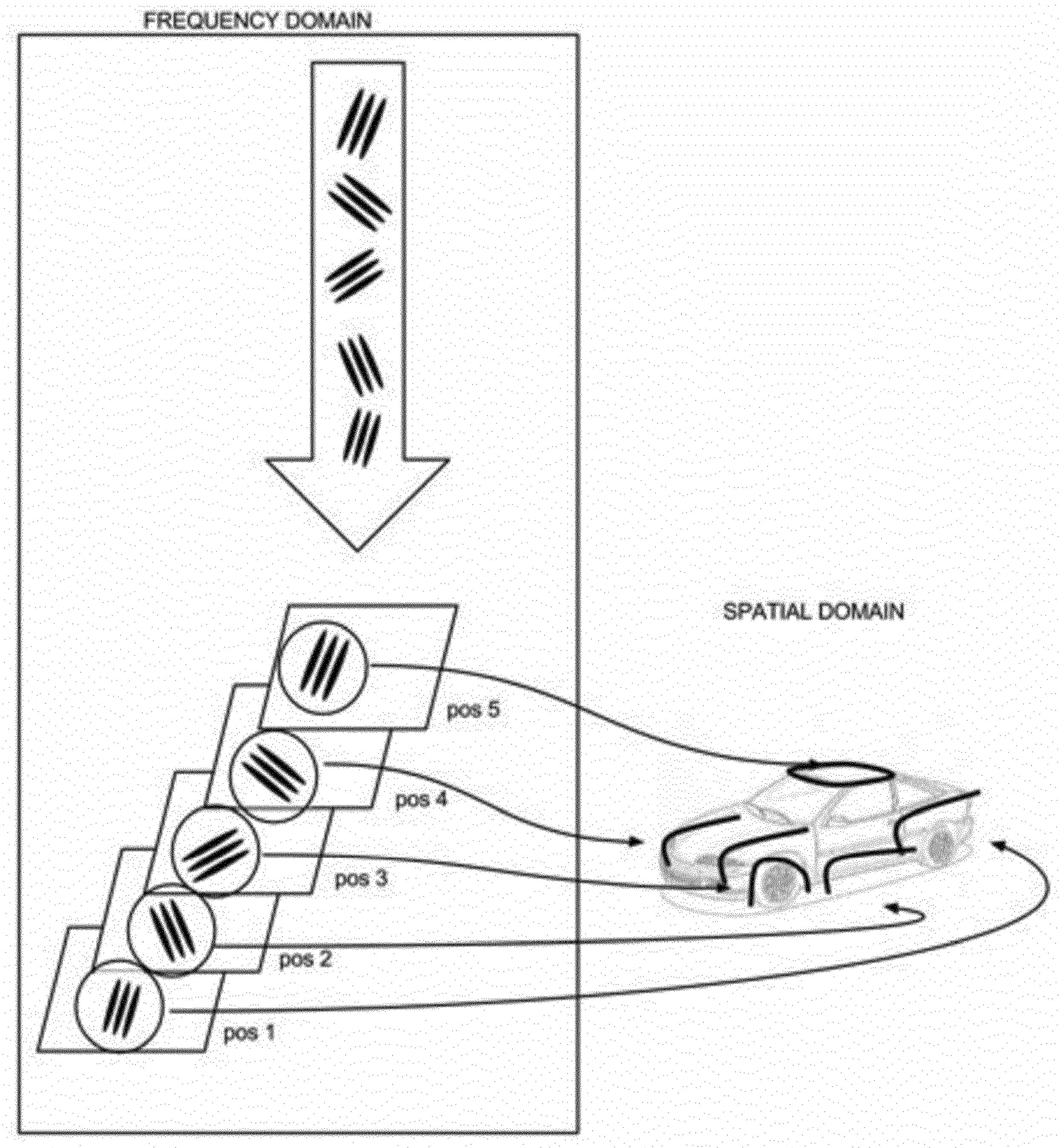


Fig. 3

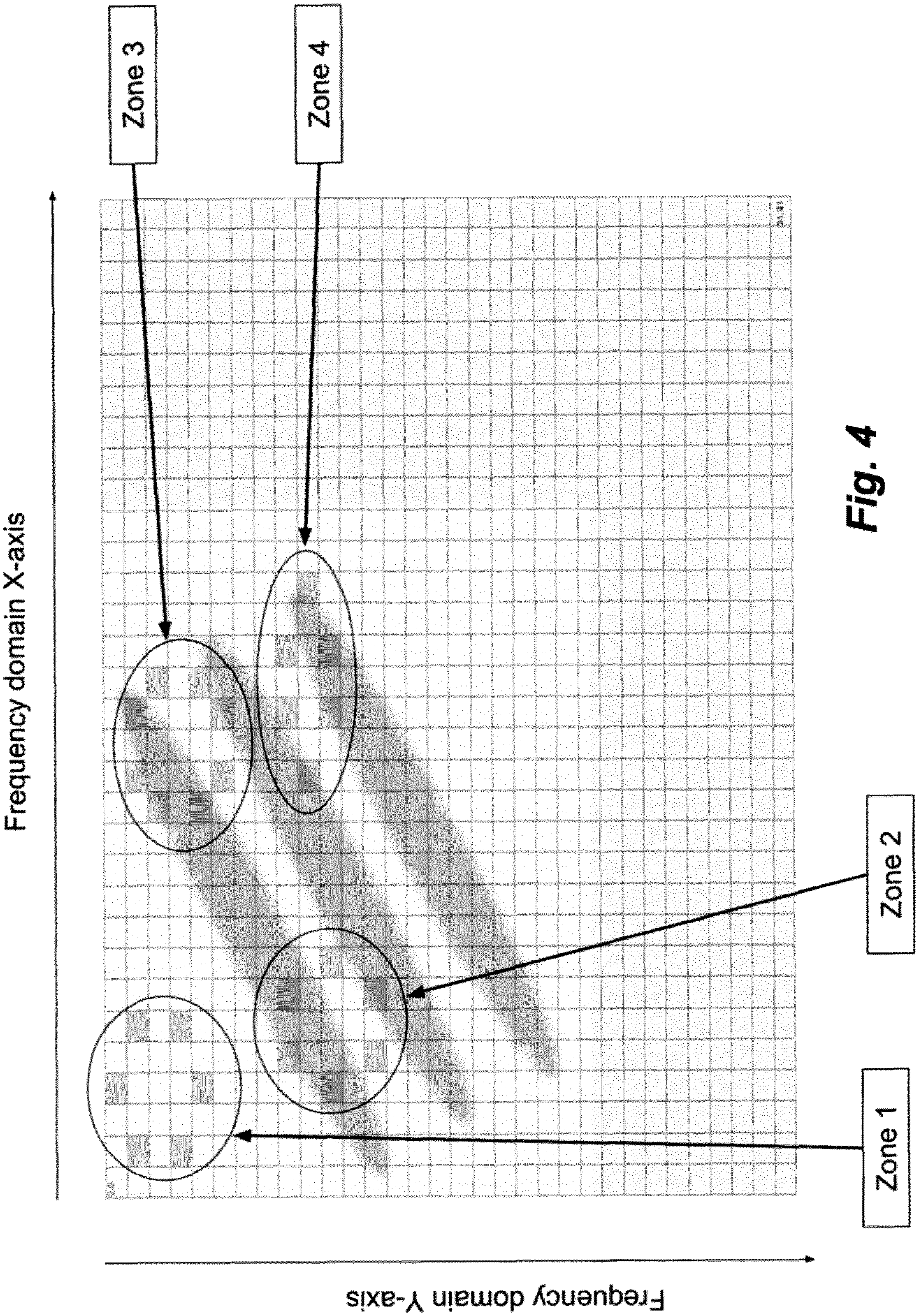
Zone 3
Zone 4
Frequency domain X-axis
Zone 2
Zone 1
Frequency domain Y-axis

Fig. 4

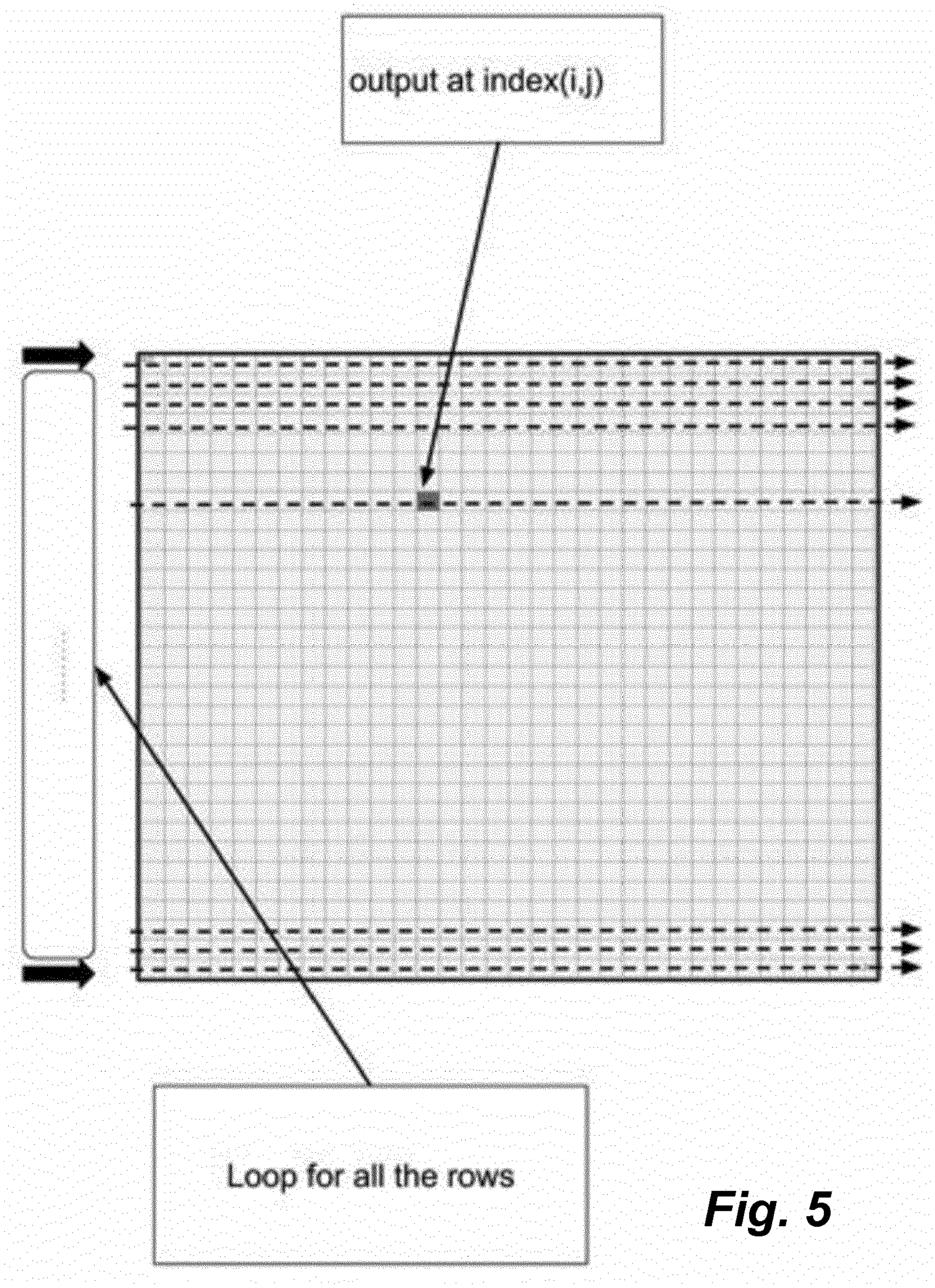


Fig. 5

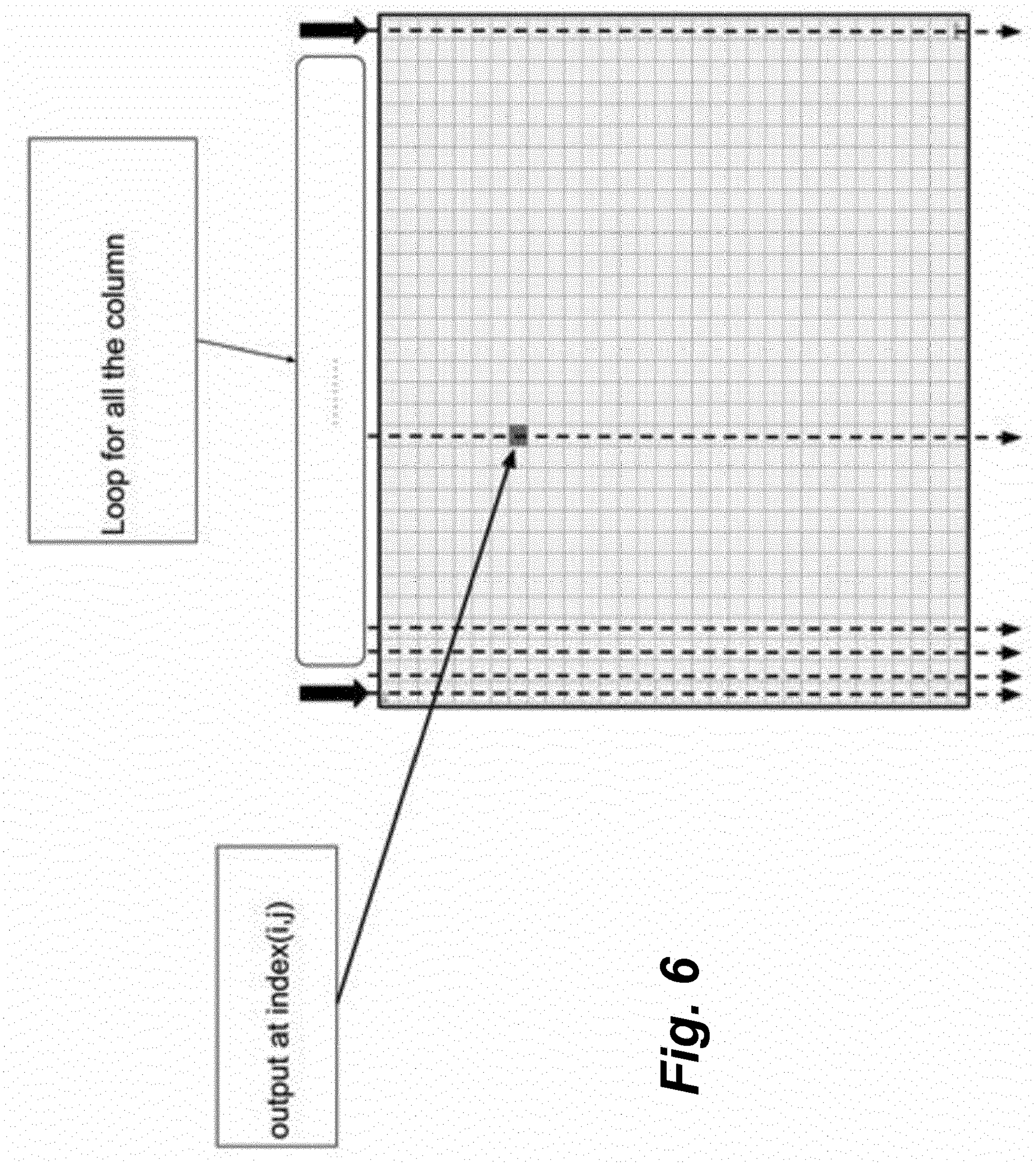


Fig. 6

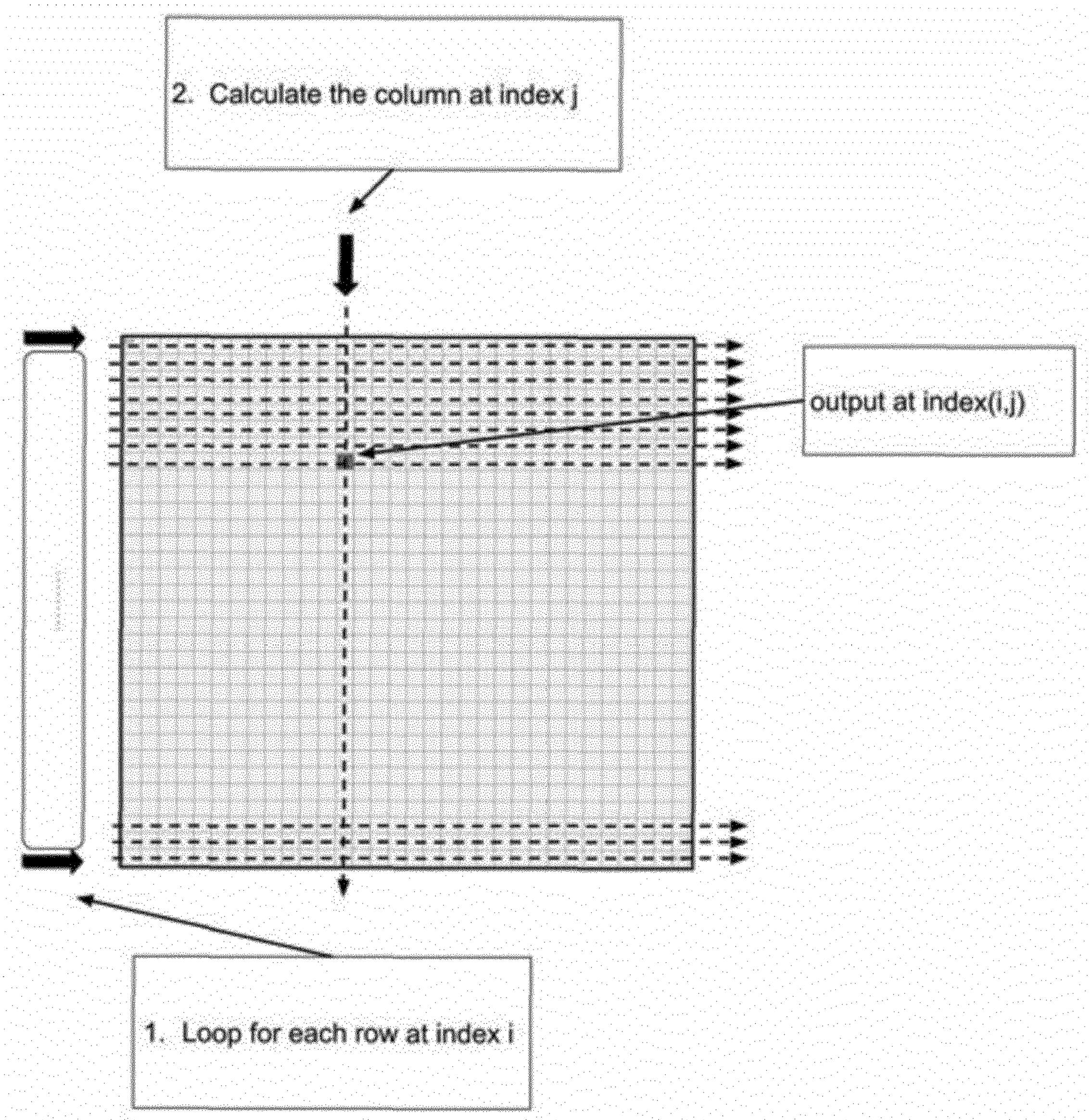
2. Calculate the column at index j
output at index(i,j)
1. Loop for each row at index i

*Fig. 7*

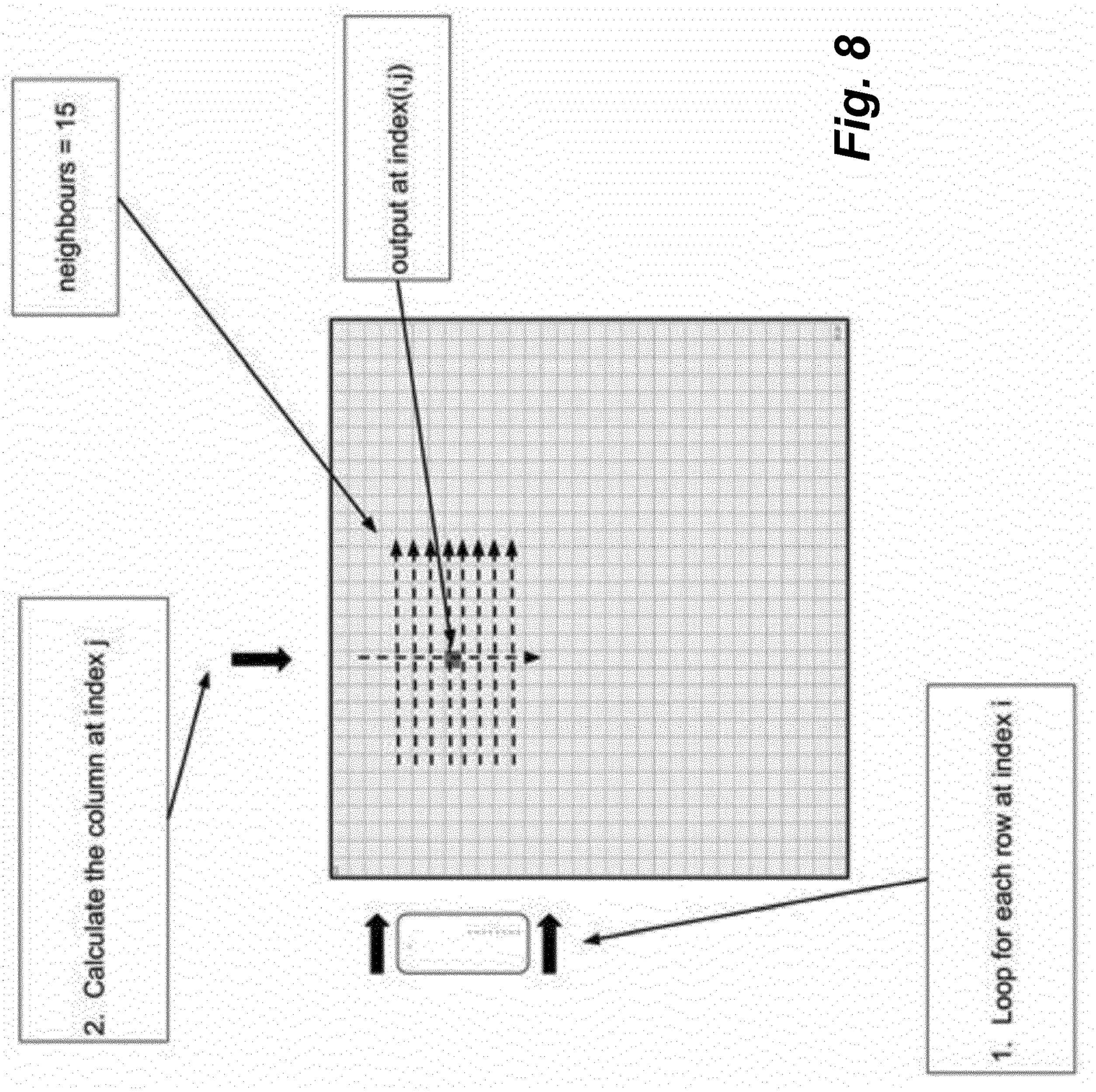
neighbours = 15
output at index(i,j)
2. Calculate the column at index j
1. Loop for each row at index i

Fig. 8

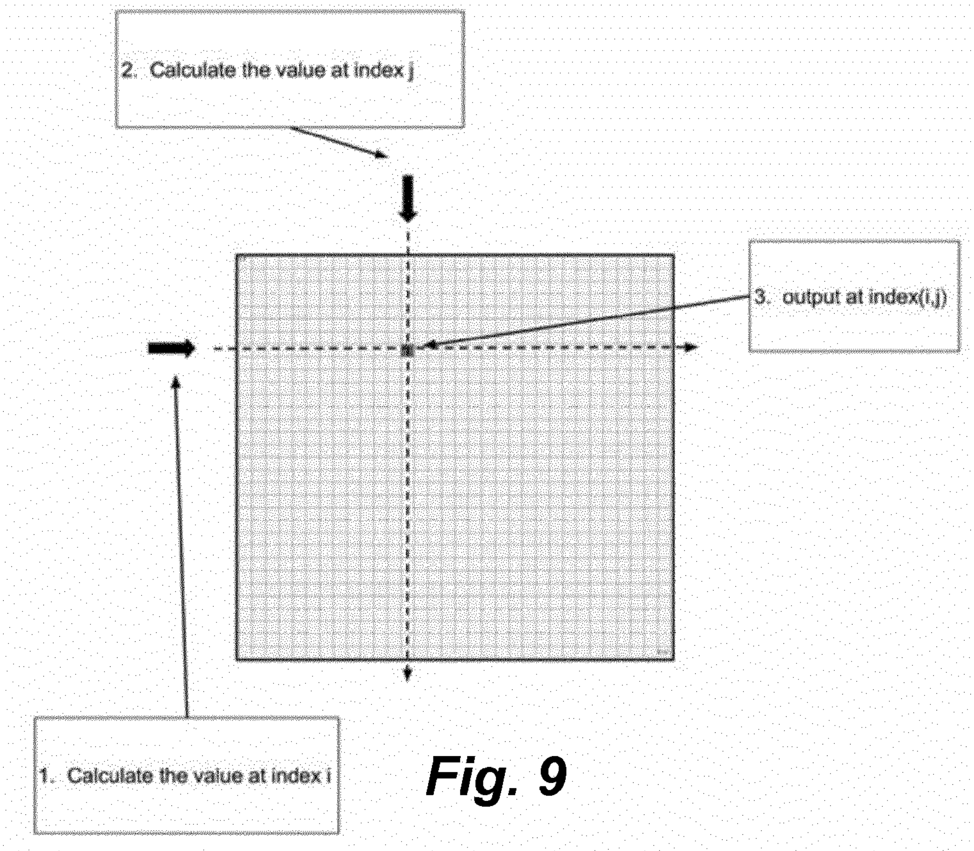
2. Calculate the value at index j
3. output at index(i,j)
1. Calculate the value at index i

Fig. 9

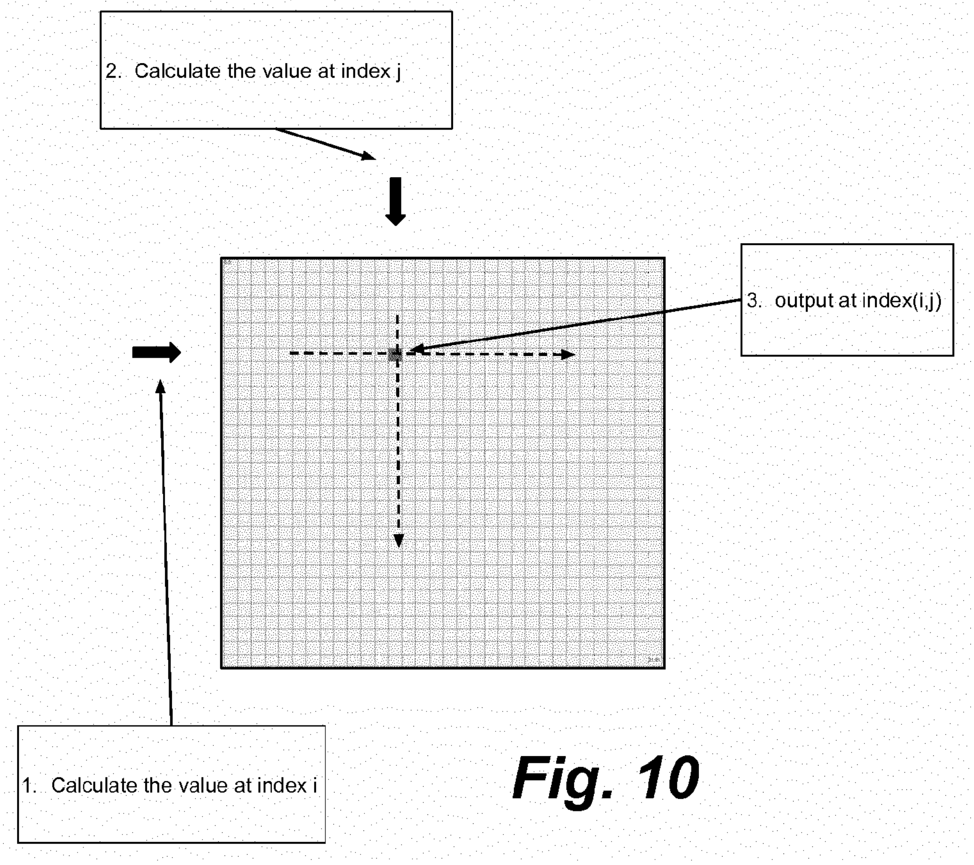
2. Calculate the value at index j
3. output at index(i,j)
1. Calculate the value at index i

Fig. 10

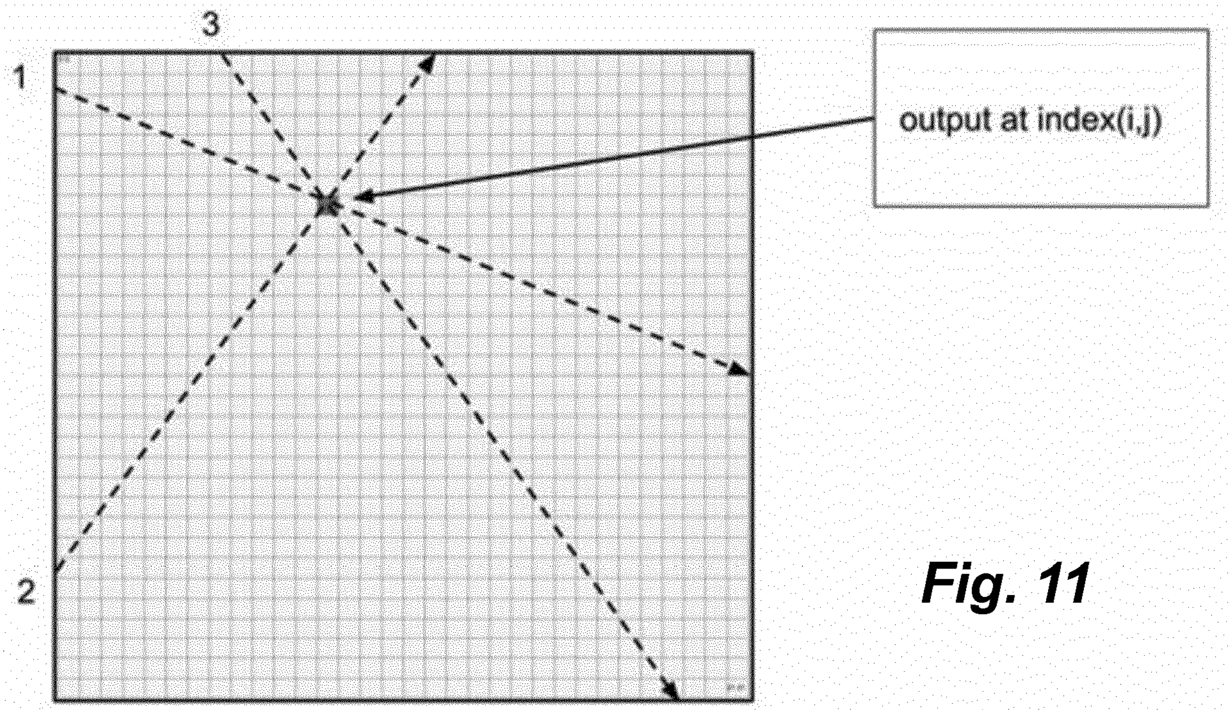


Fig. 11

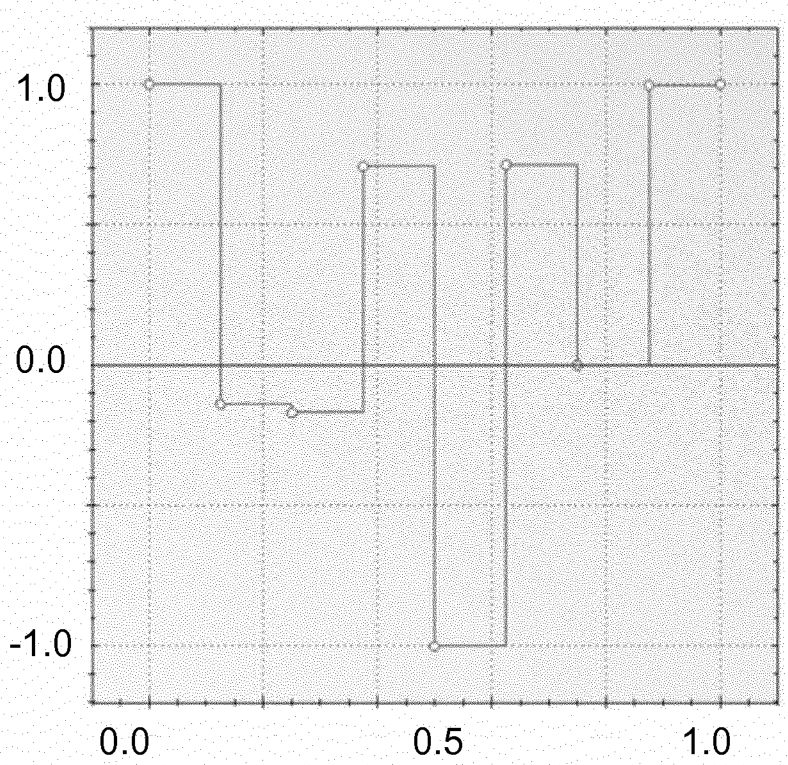


Fig. 12A

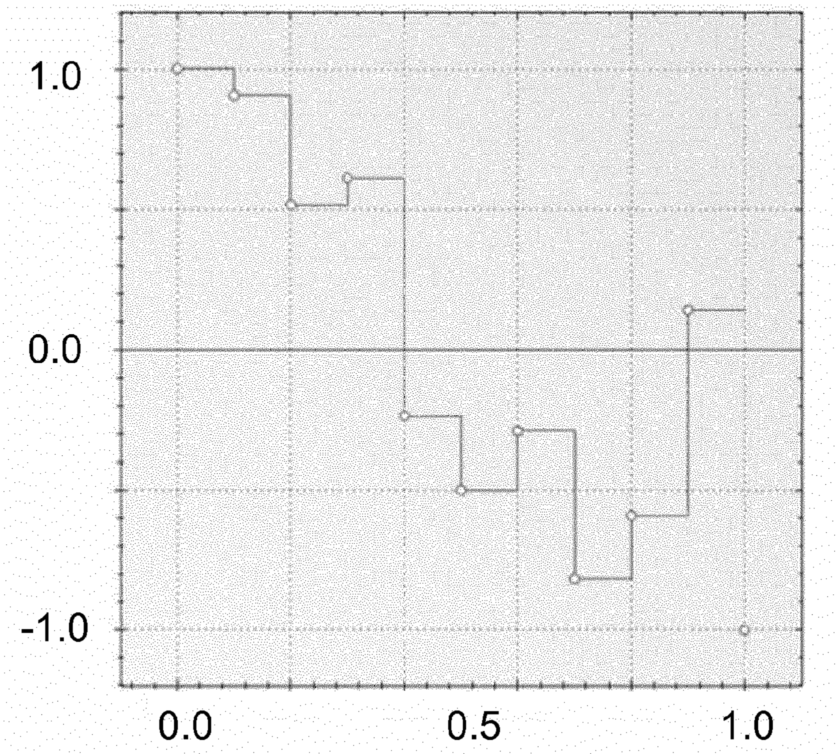


*Fig. 12B*

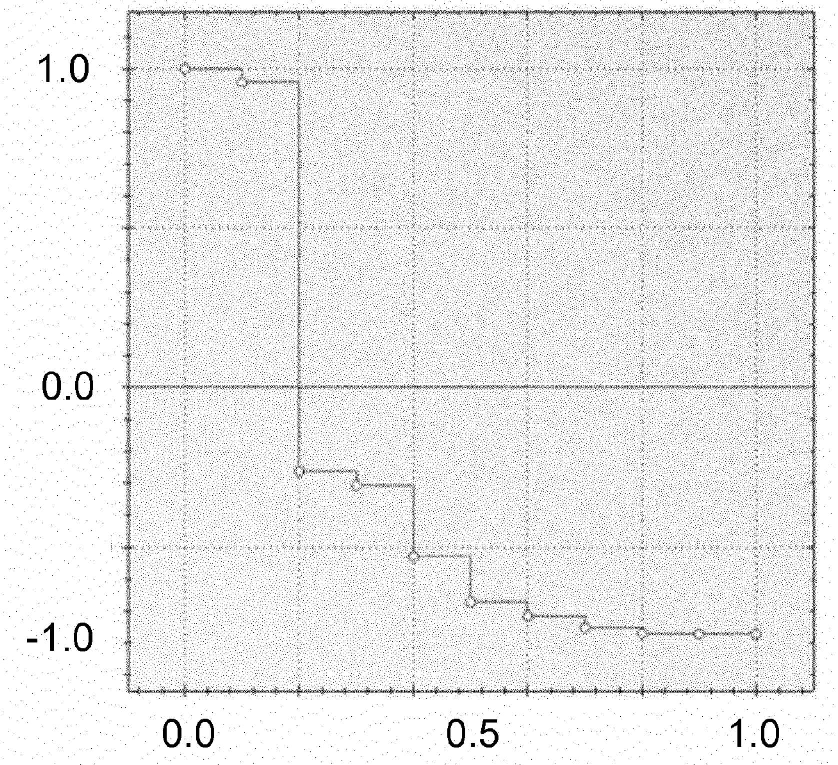


*Fig. 12C*

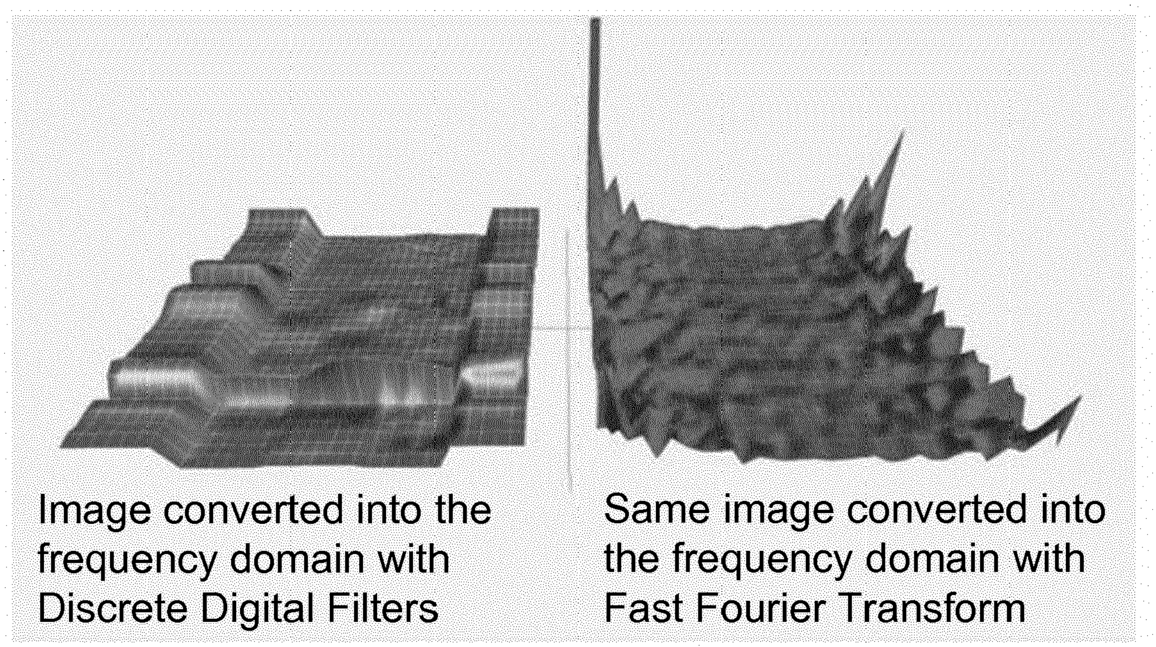


*Fig. 13*

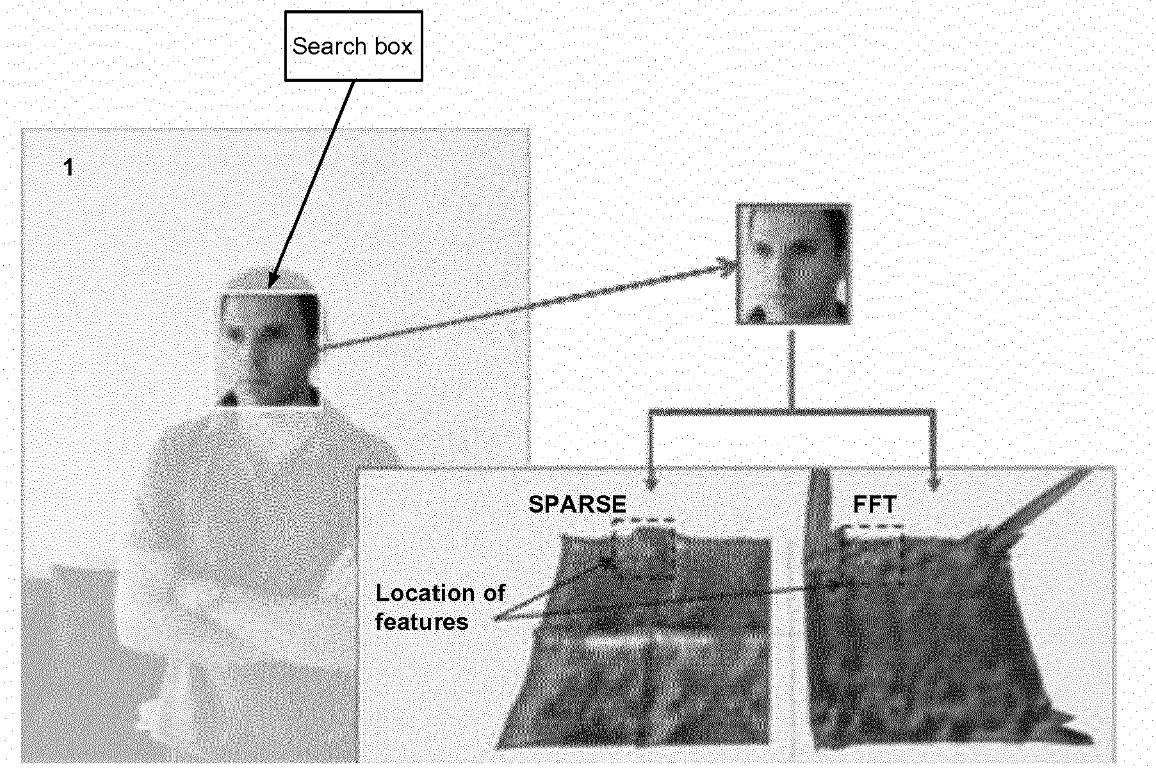


*Fig. 14A*

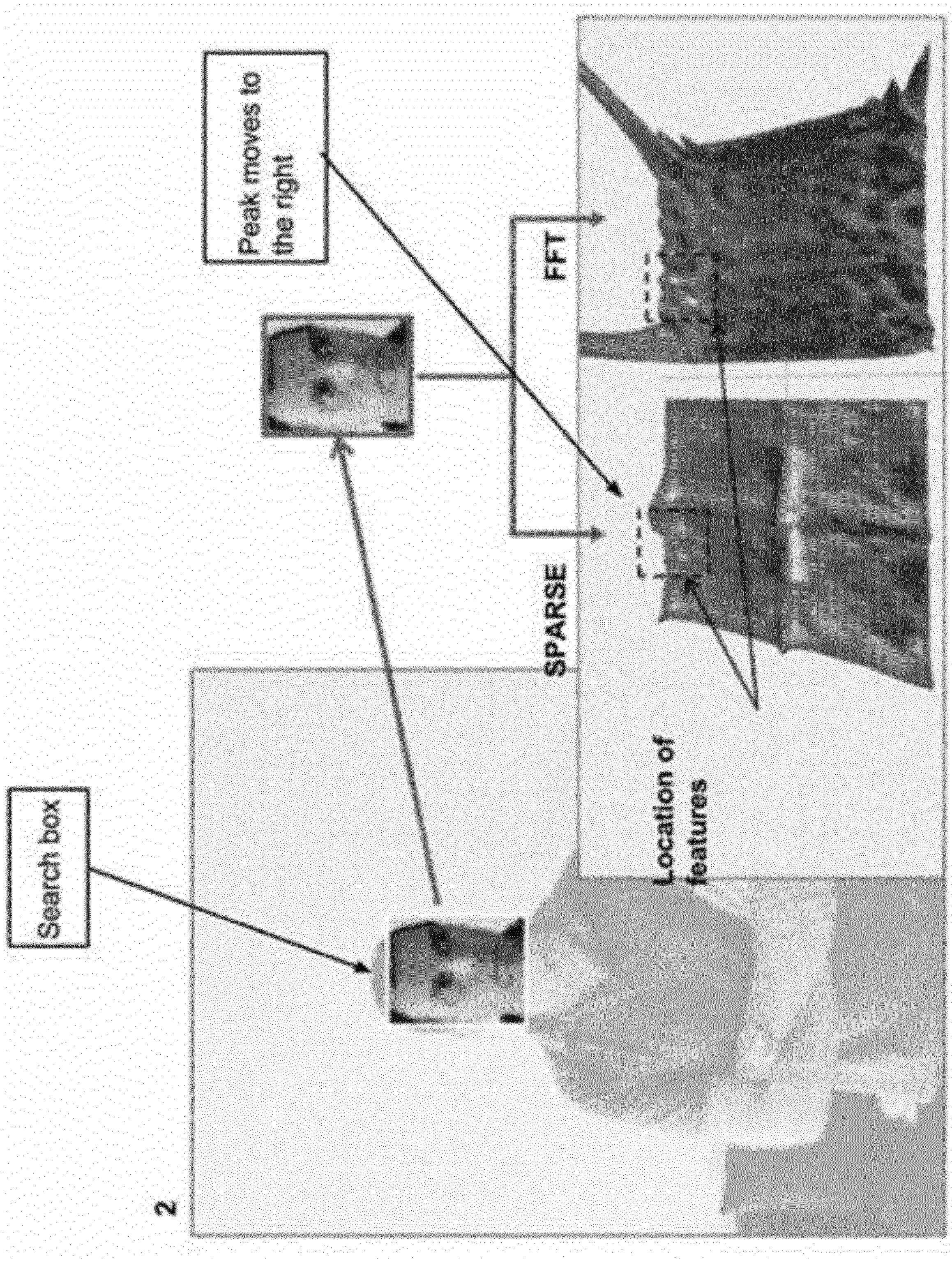
2
Search box
Peak moves to the right
SPARSE
FFT
Location of features

Fig. 14B

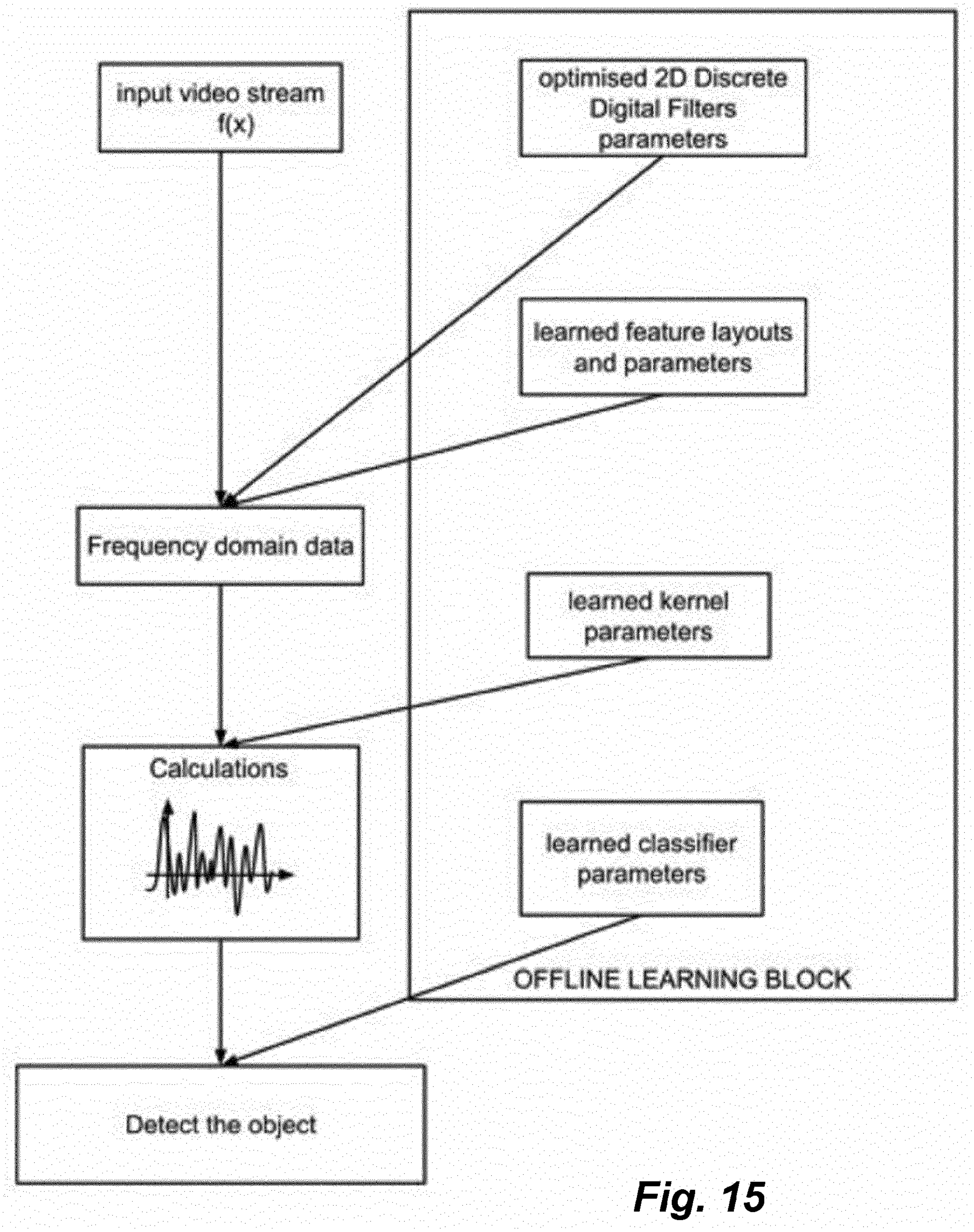
input video stream f(x)
optimised 2D Discrete Digital Filters parameters
learned feature layouts and parameters
Frequency domain data
learned kernel parameters
Calculations
learned classifier parameters
OFFLINE LEARNING BLOCK
Detect the object

*Fig. 15*

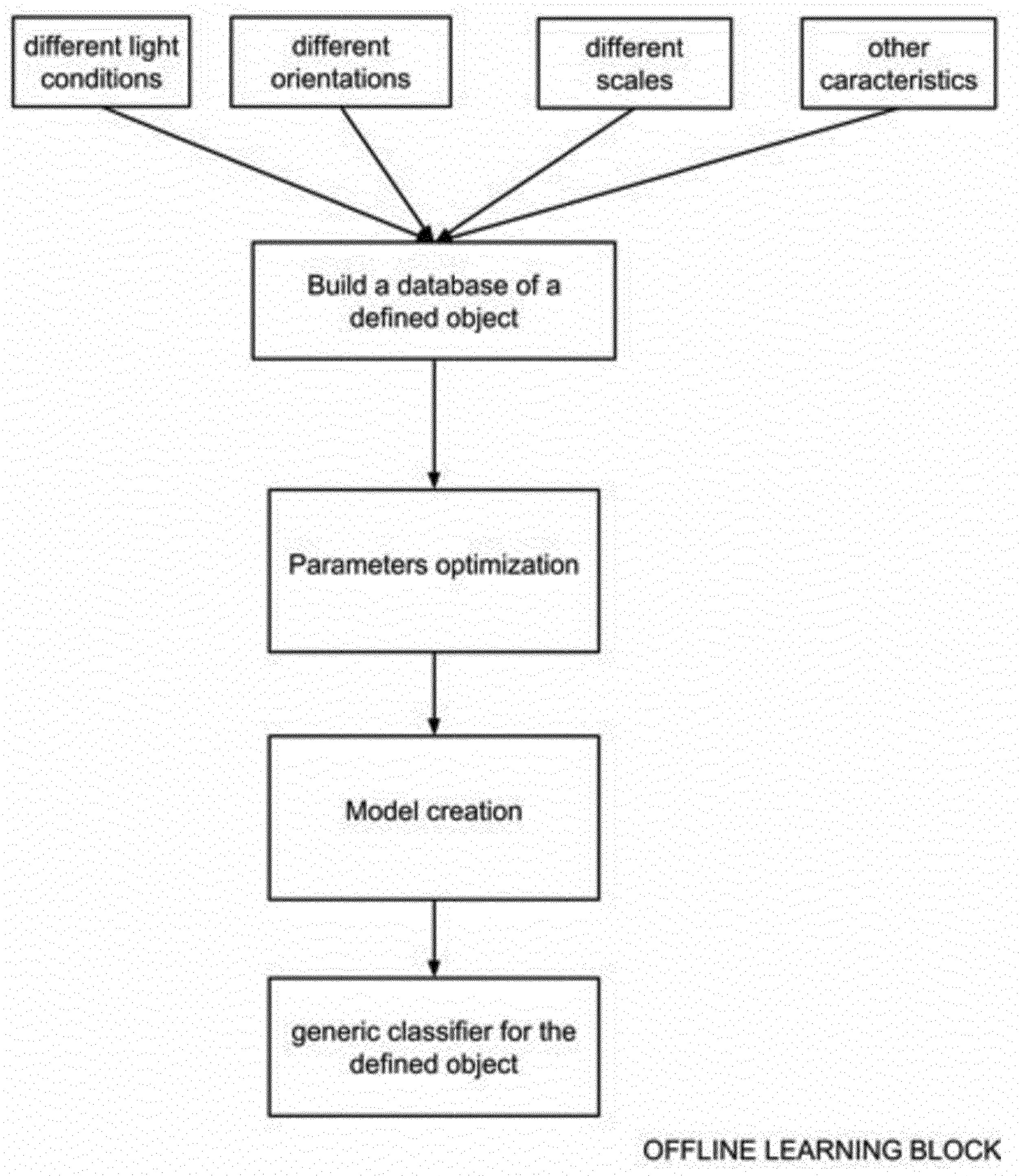
different light conditions
different orientations
different scales
other caracteristics
Build a database of a defined object
Parameters optimization
Model creation
generic classifier for the defined object
OFFLINE LEARNING BLOCK

Fig. 16

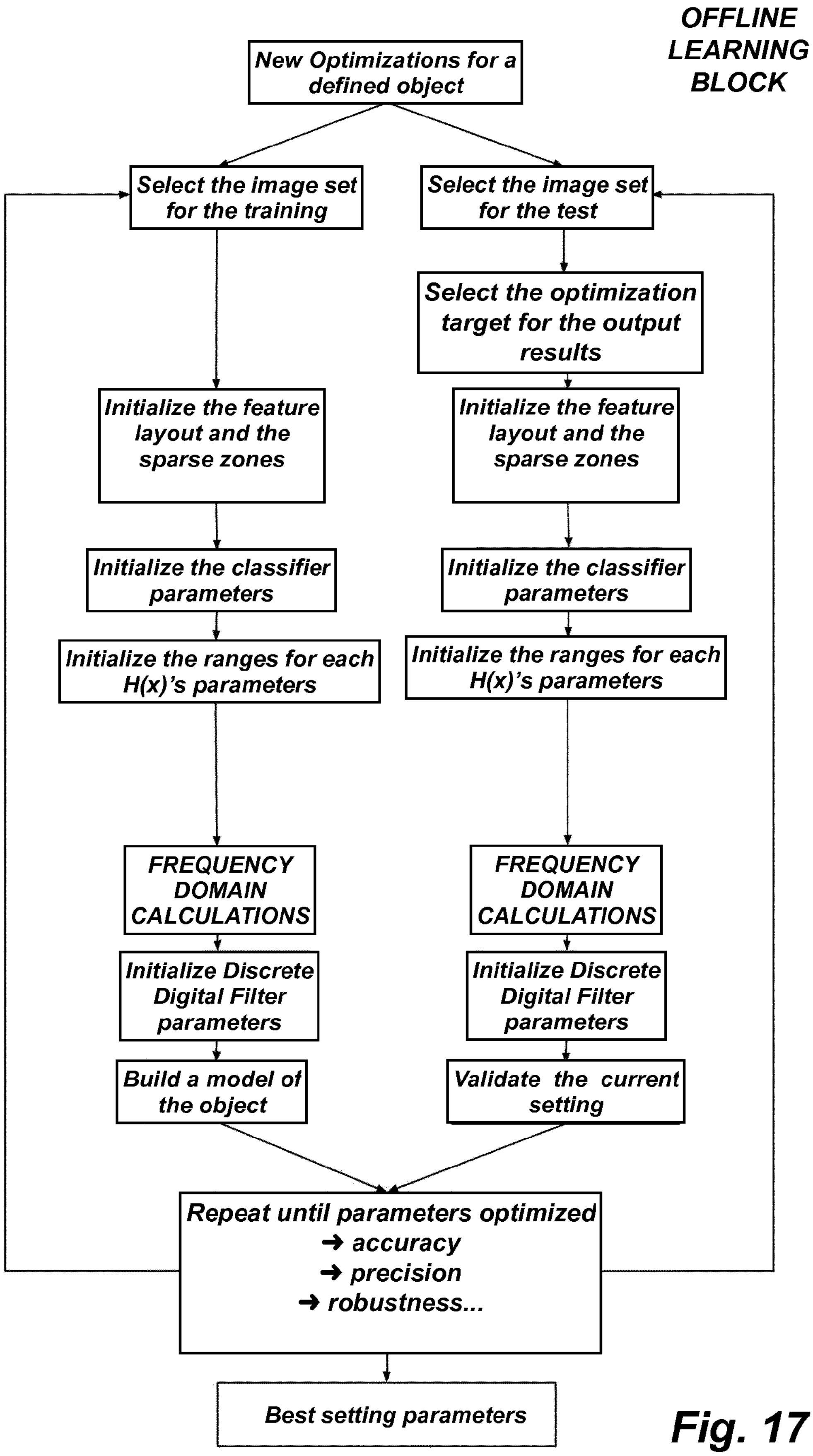
OFFLINE LEARNING BLOCK
New Optimizations for a defined object
Select the image set for the training
Select the image set for the test
Select the optimization target for the output results
Initialize the feature layout and the sparse zones
Initialize the feature layout and the sparse zones
Initialize the classifier parameters
Initialize the classifier parameters
Initialize the ranges for each H(x)'s parameters
Initialize the ranges for each H(x)'s parameters
FREQUENCY DOMAIN CALCULATIONS
FREQUENCY DOMAIN CALCULATIONS
Initialize Discrete Digital Filter parameters
Initialize Discrete Digital Filter parameters
Build a model of the object
Validate the current setting
Repeat until parameters optimized
➜ accuracy
➜ precision
➜ robustness...
Best setting parameters

Fig. 17

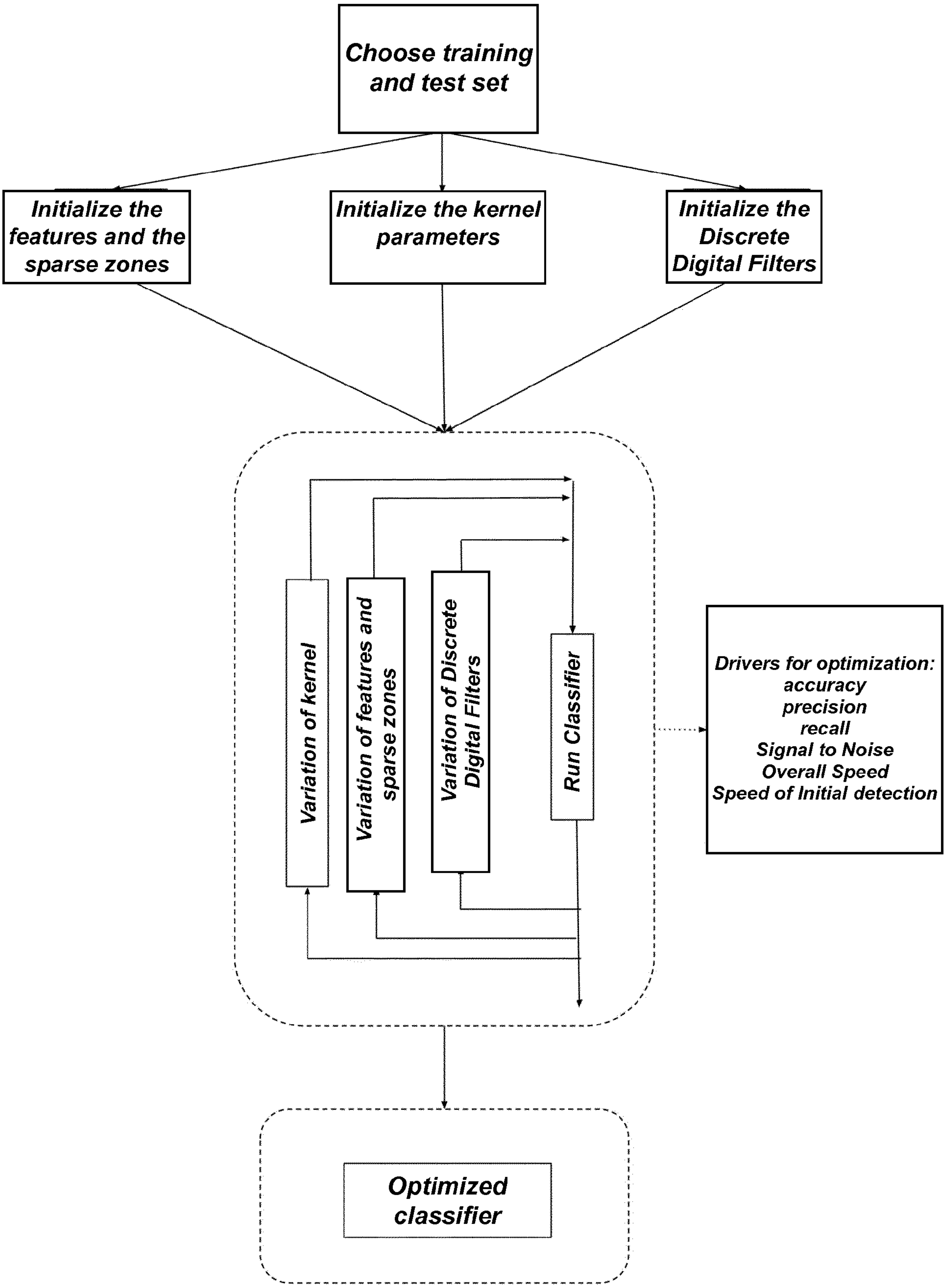
Choose training and test set
Initialize the features and the sparse zones
Initialize the kernel parameters
Initialize the Discrete Digital Filters
Variation of kernel
Variation of features and sparse zones
Variation of Discrete Digital Filters
Run Classifier
Drivers for optimization:
accuracy
precision
recall
Signal to Noise
Overall Speed
Speed of Initial detection
Optimized classifier

Fig. 18

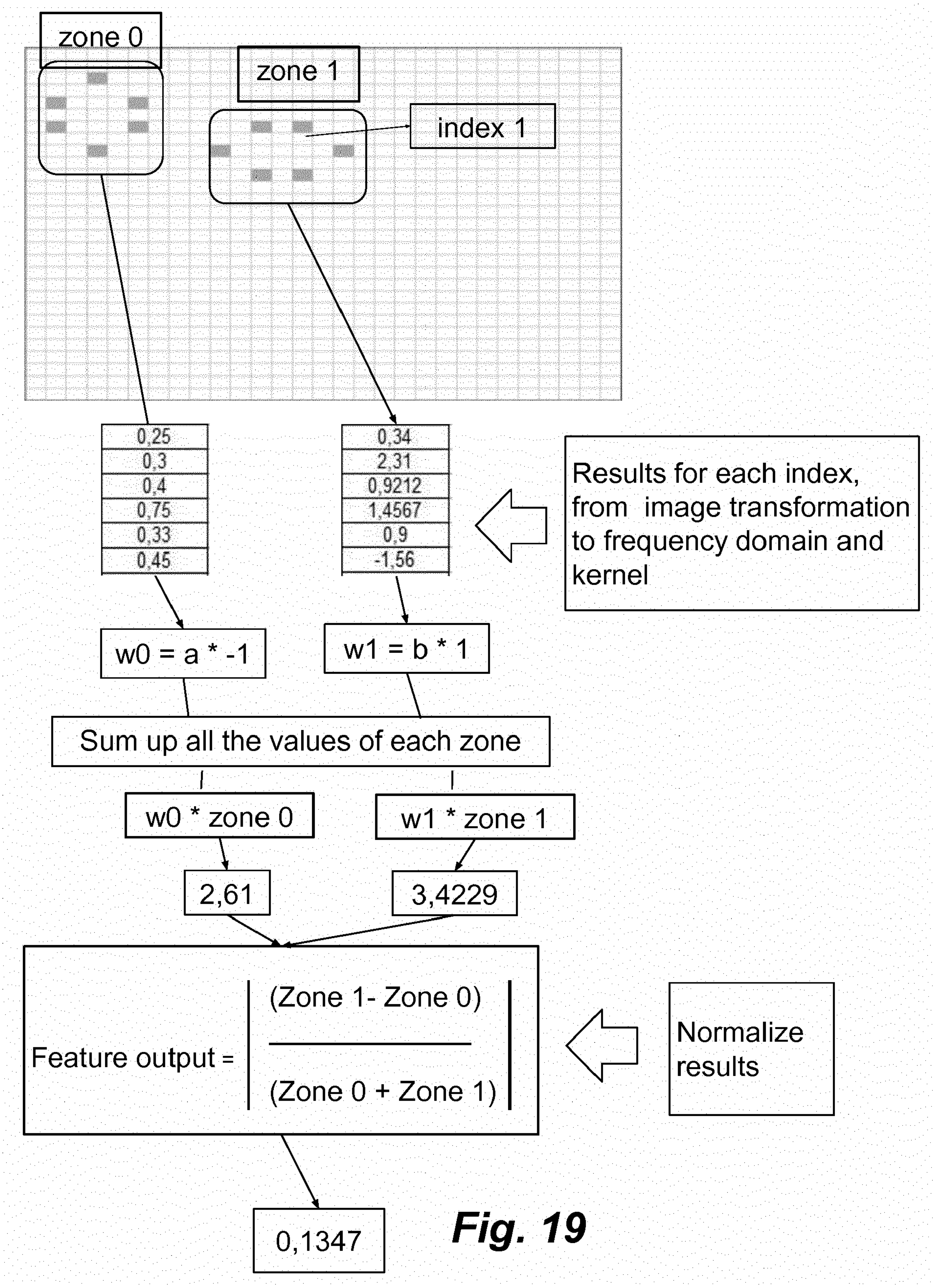
zone 0
zone 1
index 1
0,25
0,3
0,4
0,75
0,33
0,45
0,34
2,31
0,9212
1,4567
0,9
-1,56
Results for each index, from image transformation to frequency domain and kernel
w0 = a * -1
w1 = b * 1
Sum up all the values of each zone
w0 * zone 0
w1 * zone 1
2,61
3,4229
Feature output =
(Zone 1- Zone 0)
(Zone 0 + Zone 1)
Normalize results
0,1347

*Fig. 19*

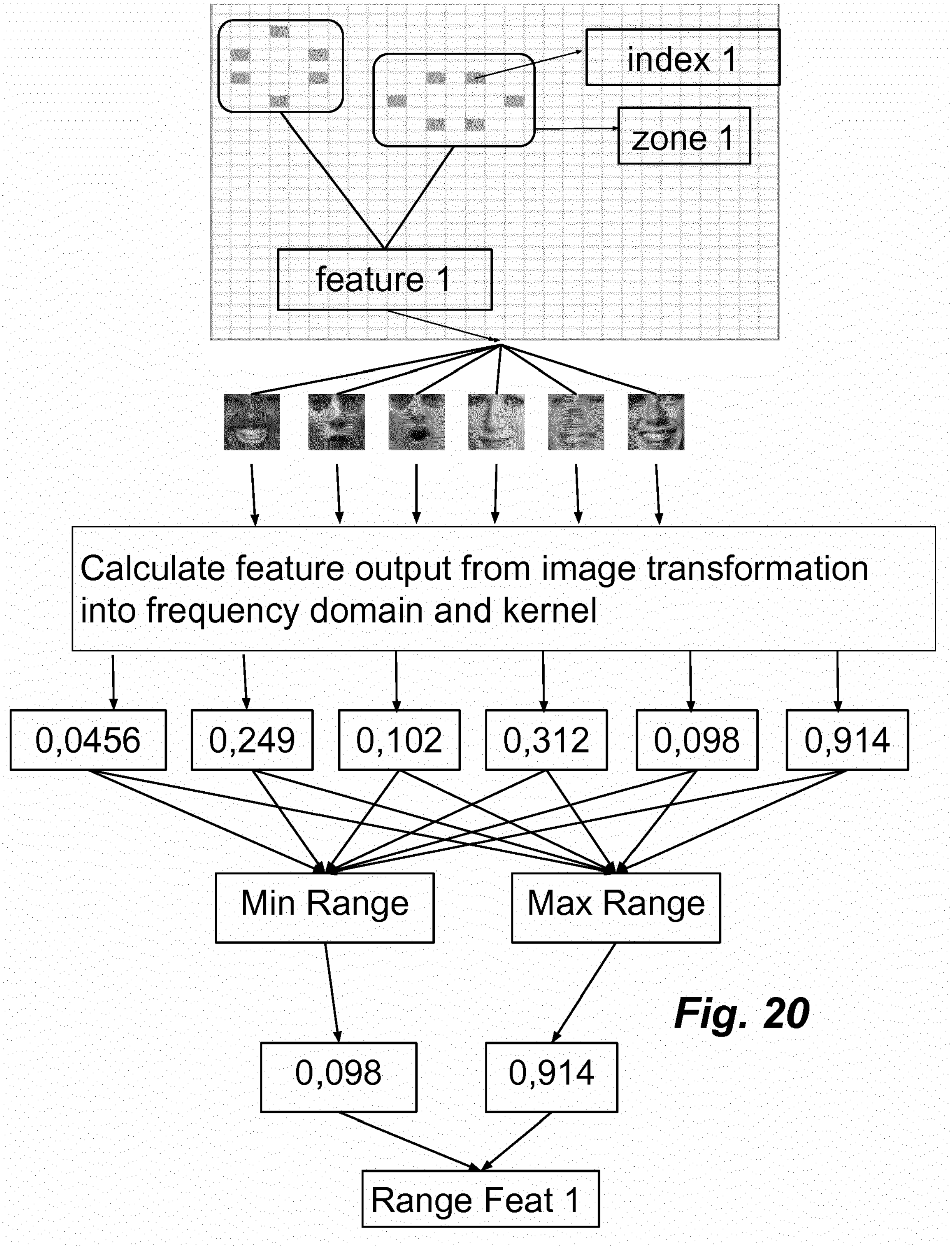
index 1
zone 1
feature 1
Calculate feature output from image transformation into frequency domain and kernel
0,0456
0,249
0,102
0,312
0,098
0,914
Min Range
Max Range
0,098
0,914
Range Feat 1

Fig. 20

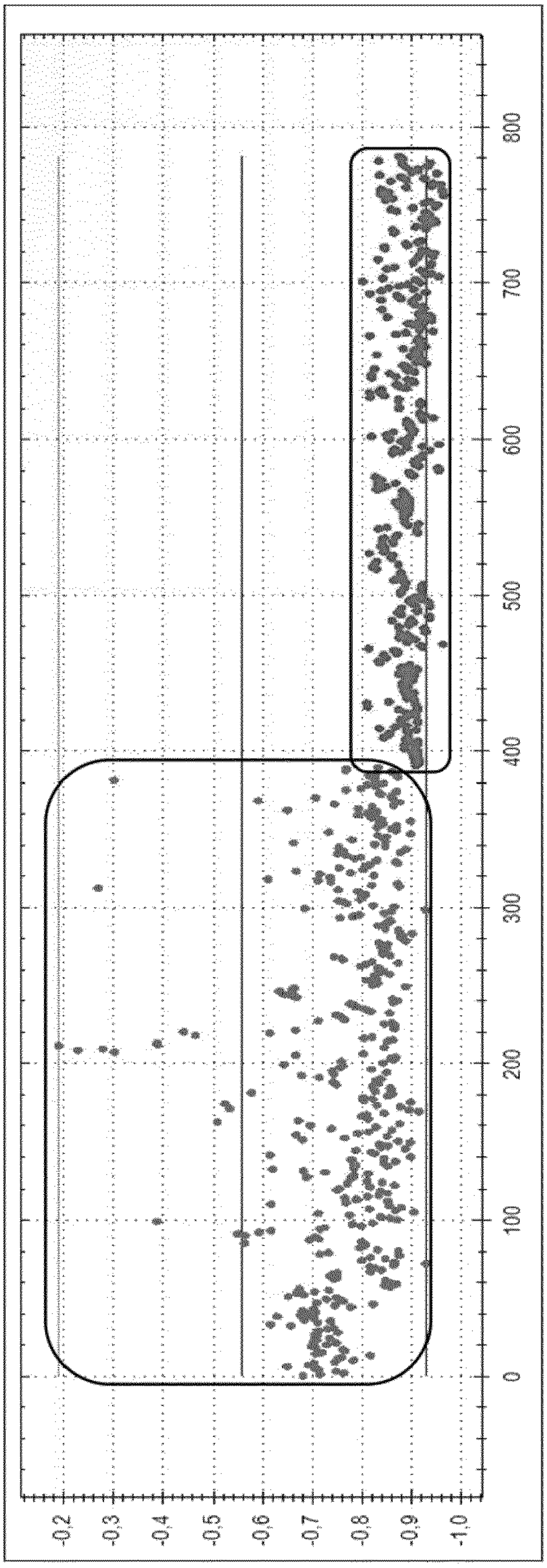


Fig. 21

Europäisches Patentamt
European Patent Office
Office européen des brevets

# EUROPEAN SEARCH REPORT

Application Number
EP 17 15 6741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 790 130 A1 (COGISEN SRL [IT]) 15 October 2014 (2014-10-15)<br>* abstract *<br>* paragraph [0046] *<br>* paragraph [0075] *<br>* paragraph [0081] - paragraph [0082] *<br>* paragraph [0085] - paragraph [0099] *<br>* paragraph [0102] - paragraph [0103] *<br>* claim 8 *<br>----- | 1-4 | INV.<br>G06K9/52<br>G06K9/62 |
| X | EP 2 790 126 A1 (COGISEN SRL [IT]) 15 October 2014 (2014-10-15)<br>* paragraph [0071] - paragraph [0072] *<br>* paragraph [0087] *<br>* paragraph [0096] - paragraph [0097] *<br>* paragraph [0108] *<br>----- | 1-4 | |

TECHNICAL FIELDS SEARCHED (IPC)
G06K

The present search report has been drawn up for all claims

1

| Place of search | Date of completion of the search | Examiner |
|---|---|---|
| The Hague | 30 June 2017 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 17 15 6741

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2017

| Patent document cited in search report | | Publication date | Patent family member(s) | | | Publication date |
|---|---|---|---|---|---|---|
| EP 2790130 | A1 | 15-10-2014 | NONE | | | |
| EP 2790126 | A1 | 15-10-2014 | AU | 2014252252 | A1 | 29-10-2015 |
| | | | CN | 105247539 | A | 13-01-2016 |
| | | | EP | 2790126 | A1 | 15-10-2014 |
| | | | HK | 1214668 | A1 | 29-07-2016 |
| | | | JP | 2016515431 | A | 30-05-2016 |
| | | | KR | 20150143584 | A | 23-12-2015 |
| | | | TW | 201506806 | A | 16-02-2015 |
| | | | US | 2014300538 | A1 | 09-10-2014 |
| | | | WO | 2014167491 | A1 | 16-10-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090238466 A